# EUROPEAN PATENT APPLICATION

(11) **EP 4 637 193 A1**
(43) Date of publication of application: **22.10.2025**
(21) Application number: 23910219.7
(22) Date of filing: 15.12.2023
(51) Int. Cl.: H04W 8/14

(54) **COMMUNICATION METHOD AND APPARATUS**

(30) Priority: 30.12.2022 CN 202211724099; 14.02.2023 CN 202310149707
(71) Applicant: Huawei Technologies Co., Ltd., Shenzhen, Guangdong 518129 (CN)
(72) Inventor: ZHU, Shichao, Shenzhen, Guangdong 518129 (CN); SUN, Fei, Shenzhen, Guangdong 518129 (CN); XU, Bin, Shenzhen, Guangdong 518129 (CN); WANG, Yan, Shenzhen, Guangdong 518129 (CN)
(74) Representative: Goddar, Heinz J.
(86) International application number: PCT/CN2023/139204
(87) International publication number: WO 2024/140289

(57) **Abstract**

A communication method and apparatus may be applied to a communication scenario in which a network controlled repeater (network controlled repeater, NCR) is deployed. The method includes: A first access network device determines indication information, and sends system information of a first cell, where the system information includes the indication information. The indication information indicates a public land mobile network PLMN corresponding to a first synchronization signal and physical broadcast channel block SSB of the first cell. A first terminal device receives the system information, and determines, based on the indication information in the system information, the PLMN corresponding to the first SSB. Based on this solution, a specific PLMN is configured for an SSB that can be forwarded by an NCR, to allow a terminal device that selects the specific PLMN to access a network via the NCR, and reject access, via the NCR, of a terminal device that selects another PLMN to the network, so that the NCR serves the terminal device that selects the specific PLMN, to improve a control capability of an operator on the NCR.

## Description

This application claims priorities to Chinese Patent Application No. 202211724099.0, filed with the China National Intellectual Property Administration on December 30, 2022 and entitled "COMMUNICATION METHOD AND APPARATUS", and to Chinese Patent Application No. 202310149707.8, filed with the China National Intellectual Property Administration on February 14, 2023 and entitled "COMMUNICATION METHOD AND APPARATUS", both of which are incorporated herein by reference in their entireties.

### TECHNICAL FIELD

Embodiments of this application relate to the communication field, and in particular, to a communication method and apparatus.

### BACKGROUND

A 5th generation (5th generation, 5G) mobile communication system uses a spectrum resource with a higher frequency band to obtain a wider transmission bandwidth. However, due to a propagation characteristic of a high-frequency radio, a path loss and a penetration loss of the high-frequency radio are very great. As a result, it is difficult to expand a coverage area, and a dead point also exists even in the coverage area. Therefore, the 5G system needs a relay system to expand the coverage area.

A network controlled repeater (network controlled repeater, NCR), as an intelligent repeater, supports functions such as uplink and downlink sensing, dynamic time division duplex (time division duplex, TDD), beam sensing, access-side beamforming (beamforming, BF), uplink and downlink forwarding power control, and dynamic switching, to implement easy and efficient area expansion.

At present, a related implementation of an integrated access and backhaul (integrated access and backhaul, IAB)-node is usually used for a design of the NCR. However, the NCR and the IAB-node are not completely the same. Therefore, the related implementation of the IAB-node cannot be completely copied for the NCR.

### SUMMARY

This application provides a communication method and apparatus, to design a related implementation of an NCR.

According to a first aspect, a communication method is provided. The method may be performed by a first terminal device, may be performed by a component of the first terminal device, for example, a processor, a chip, or a chip system of the first terminal device, or may be implemented by a logic module or software that can implement all or some functions of the first terminal device. The method includes: receiving system information of a first cell, where the system information includes indication information, and the indication information indicates a public land mobile network PLMN corresponding to a first synchronization signal and physical broadcast channel block SSB of the first cell; and determining, based on the indication information, the PLMN corresponding to the first SSB.

Based on this solution, the first terminal device may learn of a correspondence between an SSB and a PLMN based on the received system information, and can perform related processing based on the correspondence. For example, a terminal device may select an SSB based on the correspondence between an SSB and a PLMN and a PLMN selected by the terminal device, to increase an access success rate of the terminal device.

In a possible design, if the PLMN corresponding to the first SSB includes a first PLMN, the first SSB supports a terminal device that selects the first PLMN in performing initial access.

Based on the possible design, if an SSB selected by the first terminal device is the first SSB, and a PLMN selected by the first terminal device is the first PLMN, because the first SSB supports the terminal device that selects the first PLMN in performing initial access, the first terminal device may perform initial access based on the first SSB.

In a possible design, if the PLMN corresponding to the first SSB does not include a first PLMN, the first SSB does not support a terminal device that selects the first PLMN in performing initial access.

Based on the possible design, if an SSB selected by the first terminal device is the first SSB, and a PLMN selected by the first terminal device is the first PLMN, because the first SSB does not support the terminal device that selects the first PLMN in performing initial access, the first terminal device may reselect another SSB.

In a possible design, the first SSB is an SSB selected by the first terminal device in an initial access procedure, and the communication method further includes: when the PLMN corresponding to the first SSB does not include a first PLMN, selecting a fifth SSB of the first cell, and performing initial access based on the fifth SSB; or when the PLMN corresponding to the first SSB includes a first PLMN, performing initial access based on the first SSB. The first PLMN is a PLMN selected by the first terminal device in the initial access procedure.

In a possible design, the indication information further indicates a PLMN corresponding to the fifth SSB, and the PLMN corresponding to the fifth SSB includes the first PLMN.

Based on the possible design, the terminal device may determine, based on the correspondence between an SSB and a PLMN and an SSB and a PLMN that are selected by the terminal device, to continue to complete initial access based on the SSB selected by the terminal device or to reselect an SSB. For example, if a PLMN corresponding to the SSB selected by the terminal device includes the PLMN selected by the terminal device, the terminal device continues to complete initial access based on the SSB selected by the terminal device; or if a PLMN corresponding to the SSB selected by the terminal device does not include the PLMN selected by the terminal device, the terminal device reselects an SSB. Based on this, a specific PLMN is configured for an SSB that can be forwarded by an NCR, to allow a terminal device that selects the specific PLMN to access a network via the NCR, and reject access, via the NCR, of a terminal device that selects another PLMN to the network, so that the NCR serves the terminal device that selects the specific PLMN, to improve a control capability of an operator on the NCR.

In a possible design, the indication information includes an identifier of the first SSB and an identity of the PLMN corresponding to the first SSB.

According to a second aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes: determining indication information, and sending system information of a first cell, where the system information includes the indication information. The indication information indicates a public land mobile network PLMN corresponding to a first synchronization signal and physical broadcast channel block SSB of the first cell.

Based on this solution, an access network device may broadcast, in system information, a PLMN corresponding to an SSB, so that a terminal device that receives the system information can learn of a correspondence between the SSB and the PLMN, and can perform related processing based on the correspondence. For example, the terminal device may determine, based on the correspondence between the SSB and the PLMN and an SSB and a PLMN that are selected by the terminal device, to continue to complete initial access based on the SSB selected by the terminal device or to reselect an SSB. For example, if a PLMN corresponding to the SSB selected by the terminal device includes the PLMN selected by the terminal device, the terminal device continues to complete initial access based on the SSB selected by the terminal device; or if a PLMN corresponding to the SSB selected by the terminal device does not include the PLMN selected by the terminal device, the terminal device reselects an SSB.

Based on this, a specific PLMN is configured for an SSB that can be forwarded by an NCR, to allow a terminal device that selects the specific PLMN to access a network via the NCR, and reject access, via the NCR, of a terminal device that selects another PLMN to the network, so that the NCR serves the terminal device that selects the specific PLMN, to improve a control capability of an operator on the NCR.

In a possible design, if the PLMN corresponding to the first SSB includes a first PLMN, the first SSB supports a terminal device that selects the first PLMN in performing initial access.

In a possible design, if the PLMN corresponding to the first SSB does not include a first PLMN, the first SSB does not support a terminal device that selects the first PLMN in performing initial access.

In a possible design, the indication information includes an identifier of the first SSB and an identity of the PLMN corresponding to the first SSB.

According to a third aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes: receiving first information via a first NCR, where the first information indicates a first public land mobile network PLMN, and the first PLMN is a PLMN selected by a first terminal device in an initial access procedure; and if the first NCR does not support the first PLMN, rejecting access of the first terminal device via the first NCR.

Based on this solution, for a terminal device that accesses a network via an NCR, an access network device may determine whether the NCR supports a PLMN selected by the terminal device. When the NCR does not support the PLMN selected by the terminal device, the access of the terminal device via the NCR is rejected. In other words, through control of the access network device, access, via the NCR, of a terminal device that selects a PLMN supported by the NCR can be allowed, to enjoy a relay service provided by the NCR; and access, via the NCR, of a terminal device that selects a PLMN that is not supported by the NCR to the network may be rejected. Therefore, the NCR serves a terminal device that selects a specific PLMN, to improve a control capability of an operator on the NCR.

In a possible design, the method further includes: receiving second information, where the second information indicates at least one PLMN supported by the first NCR.

In a possible design, if a PLMN selected by the first NCR in the initial access procedure is different from the first PLMN, the first NCR does not support the first PLMN.

In a possible design, if the first PLMN does not support access of a network controlled repeater-mobile terminal NCR-MT, the first NCR does not support the first PLMN.

In a possible design, before receiving the first information via the first NCR, the method further includes: sending system information, where the system information indicates whether a first cell supports access of an NCR-MT.

Based on the possible design, whether the first cell supports the access of the NCR-MT is configured at a granularity of a cell, so that signaling overheads can be reduced.

In a possible design, before receiving the first information via the first NCR, the method further includes: sending system information, where the system information indicates whether each PLMN supported by a first cell supports access of the NCR-MT.

Based on the possible design, whether each PLMN supports the access of the NCR-MT is configured at a granularity of a PLMN, so that configuration flexibility can be improved.

In a possible design, rejecting the access of the first terminal device via the first NCR includes: performing beam switching on the first terminal device.

In a possible design, rejecting the access of the first terminal device via the first NCR includes: sending a radio resource control RRC message to the first terminal device, where the RRC message is used to release an RRC connection between the first terminal device and the first access network device.

In a possible design, the RRC message includes third information. The third information indicates a second SSB, the second SSB is used for a next time of access of the first terminal device, and an SSB that can be forwarded by the first NCR does not include the second SSB; or the third information indicates a third SSB, the third SSB is not used for a next time of access of the first terminal device, and the third SSB is an SSB that can be forwarded by the first NCR.

Based on the possible design, the first access network device indicates, to the first terminal device, an SSB that should be selected during a next time of access, and a case in which the first terminal device still selects an SSB that does not support the first PLMN to perform the next time of access can be avoided, to reduce an access delay of the first terminal device and improve access efficiency. Alternatively, the first access network device indicates, to the first terminal device, an SSB that cannot be used for access of the first terminal device, so that a case in which the first terminal device selects, during a next time of access, an SSB that cannot be used for the access of the first terminal device is avoided, to reduce an access delay of the first terminal device and improve access efficiency.

In a possible design, rejecting the access of the first terminal device via the first NCR includes: performing cell handover on the first terminal device.

Based on the possible design, signal quality of the first terminal device can be improved. This is because the first terminal device has accessed the first access network device via the first NCR, and it indicates that the first terminal device may be located at a cell edge of the first cell. If the first terminal device cannot access the first cell via the first NCR, signal quality is very poor after the first terminal device does not access the first cell via the first NCR. Therefore, cell handover is performed on the first terminal device, so that the first terminal device can access a target cell with good signal quality, to improve the signal quality of the first terminal device.

In a possible design, performing cell handover on the first terminal device includes: sending measurement configuration information to the first terminal device, where an SSB that can be forwarded by a second NCR does not exist in a measurement object indicated by the measurement configuration information, and a PLMN served by the second NCR does not include the first PLMN.

Based on a configuration of the measurement object, the first terminal device does not measure the SSB that can be forwarded by the second NCR, and therefore does not select the SSB, that is, does not access a network via the second NCR, so that a case in which the first terminal device is rejected by the access network device after accessing the network via the second NCR is avoided, to improve cell handover efficiency.

In a possible design, the second NCR includes an NCR controlled by a second access network device.

In a possible design, the method further includes: receiving fourth information, where the fourth information indicates an SSB that can be forwarded by at least one NCR controlled by the second access network device and/or a PLMN served by the at least one NCR.

According to a fourth aspect, a communication method is provided. The method may be performed by a first NCR, may be performed by a component of the first NCR, for example, a processor, a chip, or a chip system of the first NCR, or may be implemented by a logic module or software that can implement all or some functions of the first NCR. The method includes: determining second information, and sending the second information to a first access network device. The second information indicates at least one public land mobile network PLMN supported by the first NCR, and the first NCR is an NCR controlled by the first access network device.

Based on this solution, the first NCR indicates, to the first access network device, the at least one PLMN supported by the first NCR, so that the first access network device can learn of the at least one PLMN supported by the first NCR, determine whether the first NCR supports a PLMN selected by a terminal device that accesses a network via the first NCR, and further perform access control on the terminal device.

According to a fifth aspect, a communication method is provided. The method may be performed by a first NCR, may be performed by a component of the first NCR, for example, a processor, a chip, or a chip system of the first NCR, or may be implemented by a logic module or software that can implement all or some functions of the first NCR. The method includes: A first network controlled repeater-mobile terminal NCR-MT determines that a frequency band supported by a first network controlled repeater-forwarding module NCR-Fwd is a first frequency band; and the first NCR-MT performs initial access on the first frequency band.

Based on this solution, when performing initial access, an NCR-MT considers a capability of an NCR-Fwd, and performs initial access or measurement on a frequency band supported by the NCR-Fwd, so that the NCR-Fwd can also operate normally after the NCR-MT subsequently accesses a network, to avoid a case in which a cell accessed by the NCR-MT is on a frequency band that is not supported by the NCR-Fwd, and ensure normal operation of an NCR.

In a possible design, after the first NCR-MT completes the initial access, the method further includes: The first NCR-MT measures a synchronization signal and physical broadcast channel block SSB on the first frequency band.

According to a sixth aspect, a communication method is provided. The method may be performed by a first NCR, may be performed by a component of the first NCR, for example, a processor, a chip, or a chip system of the first NCR; or may be implemented by a logic module or software that can implement all or some functions of the first NCR. The method includes:

A first network controlled repeater-mobile terminal NCR-MT receives system information of a first cell, where the system information includes NCR-support information, closed access group CAG information corresponding to at least one public land mobile network PLMN supported by the first cell, and cell reservation information, the NCR-support information indicates whether each PLMN supported by the first cell supports access of the NCR-MT, and the cell reservation information indicates whether the first cell is a reserved cell; and the first NCR-MT ignores the CAG information and the cell reservation information, and accesses the first cell when the NCR-support information indicates that a first PLMN supports the access of the NCR-MT, where the first PLMN is a PLMN selected by the first NCR-MT in an initial access procedure.

Based on this solution, because an NCR-MT ignores CAG information and cell reservation information, a non-NPN NCR (namely, an NCR that does not meet an NPN constraint condition) is allowed to access a CAG-only cell to improve coverage of the non-NPN NCR, to reduce production costs and complexity of the NCR, and facilitate large-scale deployment of the NCR.

In addition, because an NCR-Fwd transparently amplifies and forwards only a physical signal, ignoring the NPN constraint condition by the NCR-MT does not affect a common terminal device. Even if the non-NPN NCR accesses the CAG-only cell, the common terminal device in the CAG-only cell still determines the NPN constraint condition, and an AMF network element side still performs NPN access control on the common terminal device. This does not cause non-NPN UE to access the CAG-only cell, and does not cause extra energy consumption to the common terminal device.

According to a seventh aspect, a communication method is provided. The method may be performed by a mobility management network element, may be performed by a component of the mobility management network element, for example, a processor, a chip, or a chip system of the mobility management network element, or may be implemented by a logic module or software that can implement all or some functions of the mobility management network element. The method includes: The mobility management network element receives a fourth message from a first access network device, where the fourth message includes fifth information, and the fifth information indicates that a terminal device associated with the fourth message is a network controlled repeater-mobile terminal NCR-MT; and the mobility management network element determines, based on the fifth information, not to perform non-public network NPN access control on the terminal device.

Based on this solution, because the mobility management network element does not perform NPN access control on an NCR-MT, a non-NPN NCR (namely, an NCR that does not meet an NPN constraint condition) is allowed to access a CAG-only cell to improve coverage of the non-NPN NCR, to reduce production costs and complexity of the NCR, and facilitate large-scale deployment of the NCR.

According to an eighth aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes:

The first access network device sends a first message to a mobility management network element, where the first message is used to request a system temporary mobile subscriber identity S-TMSI of a first network controlled repeater-mobile terminal NCR-MT, or the first message is used to request the mobility management network element to retain an NG interface application protocol identity NGAP ID of the first NCR-MT. When the first access network device needs to send control information to the first NCR-MT in an idle state, the first access network device sends a second message to the mobility management network element, where the second message is used to request to initiate paging on the first NCR-MT in the idle state, and the second message includes the S-TMSI of the first NCR-MT or the second message includes the NGAP ID of the first NCR-MT.

Based on this solution, when an access network device releases an NCR-MT to an RRC idle state, because the access network device requests an S-TMSI of the NCR-MT from the mobility management network element or requests the mobility management network element to store an NGAP ID of the NCR-MT, when the access network device needs to send control information to the NCR-MT again, the access network device may identify the NCR-MT by using the S-TMSI or the NGAP ID, so that the mobility management network element can send a paging message to the NCR-MT, and wake up the NCR-MT, to enable the NCR-MT to enter an RRC connected state.

In other words, based on this solution, after releasing the NCR-MT to the RRC idle state, the access network device can wake up the NCR-MT again. NCR energy saving is implemented without affecting control of the access network device on an NCR. This facilitates normal operation of the NCR.

In a possible design, the first message includes a radio access network side NGAP ID of the first NCR-MT and/or a mobility management network element side NGAP ID of the first NCR-MT.

In a possible design, the first message is used to request the S-TMSI of the first NCR-MT; and the method further includes: The first access device receives a third message from the mobility management network element, where the third message includes the S-TMSI of the first NCR-MT; and the first access network device stores the S-TMSI of the first NCR-MT.

In a possible design, the second message includes the S-TMSI of the first NCR-MT.

In a possible design, the first message is used to request the mobility management network element to retain the NGAP identity of the first NCR-MT; and the method further includes: The first access network device stores the NGAP ID of the first NCR-MT.

In a possible design, the second message includes the NGAP ID of the first NCR-MT.

According to a ninth aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes: The first access network device sends measurement configuration information to a first terminal device, where an SSB that can be forwarded by a second NCR does not exist in a measurement object indicated by the measurement configuration information, a PLMN served by the second NCR does not include a first PLMN, and the first PLMN is a PLMN selected by the first terminal device in an initial access procedure.

Based on this solution, because the SSB that can be forwarded by the second NCR does not exist in the measurement object configured by the first access network device for the first terminal device, the first terminal device does not measure the SSB that can be forwarded by the second NCR, and therefore does not select the SSB, that is, does not access a network via the second NCR, so that a case in which the first terminal device accesses the network via an incorrect NCR is avoided, to improve network access efficiency of the terminal device.

In a possible design, the second NCR includes an NCR controlled by a second access network device.

According to a tenth aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes: The first access network device receives fourth information from a second access network device, where the fourth information indicates an SSB that can be forwarded by at least one NCR controlled by the second access network device and/or a PLMN served by the at least one NCR.

Based on this solution, the first access network device can learn of related information of an NCR controlled by the second access network device, so that the first access network device configures a cell of the first access network device or a terminal device that accesses the first access network device. For example, the first access network device may configure, based on the related information of the NCR controlled by the second access network device, a proper measurement object for the terminal device that accesses the first access network device.

In a possible design, the method further includes: The first access network device sends sixth information to the second access network device, where the sixth information indicates an SSB that can be forwarded by at least one NCR controlled by the first access network device and/or a PLMN served by the at least one NCR.

According to an eleventh aspect, a communication method is provided. The method may be performed by a first NCR, may be performed by a component of the first NCR, for example, a processor, a chip, or a chip system of the first NCR, or may be implemented by a logic module or software that can implement all or some functions of the first NCR. The method includes: When a first condition is met, a first NCR-Fwd determines that a first NCR-MT needs to enter an idle state; and the first NCR-MT sends a first message to a first access network device, where the first message is used to request to release a radio resource control connection RRC connection of the first NCR-MT.

The first condition includes: The first NCR-Fwd receives first indication information from a first operation, administration and maintenance server, where the first indication information indicates to turn off the first NCR or indicates the first NCR-MT to enter the idle state. Alternatively, the first condition includes: OFF time of the first NCR arrives.

Based on this solution, an NCR-Fwd may determine whether an NCR-MT needs to enter an idle state. When the NCR-MT needs to enter the idle state, the NCR-MT requests an access network device to release an RRC connection of the NCR-MT and enters the idle state. This complies with a currently stipulated principle that only the access network device can control the NCR-MT to enter the idle state, and has high compatibility. In addition, when receiving indication information indicating to turn off an NCR or when OFF time of the NCR arrives, the NCR-Fwd determines that the NCR-MT needs to enter the idle state. Because the NCR-MT may not need to control the NCR-Fwd after the NCR-Fwd is turned off, the NCR-MT enters the idle state in this scenario, to implement NCR energy saving.

According to a twelfth aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes: receiving a second message from a second operation, administration and maintenance OAM server, where the second message is used to notify the first access network device to release a radio resource control RRC connection of a first NCR-MT; and sending a third message to a first NCR, where the third message is used to release the RRC connection of the first NCR-MT.

Based on this solution, an access network device may release an NCR-MT to an idle state based on a notification or a request of an OAM server. This complies with a currently stipulated principle that only the access network device can control the NCR-MT to enter the idle state, and has high compatibility. In addition, when determining that an NCR-Fwd is turned off, the OAM server may notify or request to release the NCR-MT to the idle state. Because the NCR-MT may not need to control the NCR-Fwd after the NCR-Fwd is turned off, the NCR-MT is released to the idle state in this scenario, to implement NCR energy saving.

In a possible design, the second message includes an identifier of the first NCR.

According to a thirteenth aspect, a communication method is provided. The method may be performed by a first access network device, may be performed by a component of the first access network device, for example, a processor, a chip, or a chip system of the first access network device, or may be implemented by a logic module or software that can implement all or some functions of the first access network device. The method includes: receiving a fourth message from a second operation, administration and maintenance OAM server, where the fourth message is used to notify the first access network device to indicate a first NCR-MT to enter a connected state; and sending a broadcast message, where the broadcast message indicates the first NCR-MT to enter the connected state.

Based on this solution, after an NCR-MT enters an idle state, an access network device may send, based on a notification message of an OAM server, a broadcast message to indicate the NCR-MT to enter a connected state. In other words, after the NCR-MT is released to the RRC idle state, the NCR-MT can be woken up again. NCR energy saving is implemented without affecting control of the access network device on an NCR. This facilitates normal operation of the NCR.

In a possible design, the broadcast message includes an identifier of a first NCR and second indication information, and the second indication information indicates the first NCR-MT to enter the connected state. In a possible design, the broadcast message is a SIB or a MIB.

According to a fourteenth aspect, a communication apparatus is provided, to implement various methods. The communication apparatus may be the first terminal device in the first aspect, or an apparatus included in the first terminal device, for example, a chip or a chip system; the communication apparatus may be the first access network device in the second aspect, the third aspect, the eighth aspect, the ninth aspect, the tenth aspect, the twelfth aspect, or the thirteenth aspect, or an apparatus included in the first access network device, for example, a chip or a chip system; the communication apparatus may be the first NCR in the fourth aspect, the fifth aspect, the sixth aspect, or the eleventh aspect, or an apparatus included in the first NCR, for example, a chip or a chip system; or the communication apparatus may be the mobility management network element in the seventh aspect, or an apparatus included in the mobility management network element, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any one of the possible implementations of the foregoing aspects. The transceiver module may include a receiving module and a sending module that are respectively configured to implement a receiving function and a sending function in any one of the foregoing aspects and any one of the possible implementations of the foregoing aspects.

In some possible designs, the transceiver module may include a transceiver circuit, a transceiver machine, a transceiver, or a communication interface.

According to a fifteenth aspect, a communication apparatus is provided, including a processor and a memory. The memory is configured to store computer instructions. When the processor executes the instructions, the communication apparatus is enabled to perform the method according to any one of the foregoing aspects. The communication apparatus may be the first terminal device in the first aspect, or an apparatus included in the first terminal device, for example, a chip or a chip system; the communication apparatus may be the first access network device in the second aspect, the third aspect, the eighth aspect, the ninth aspect, the tenth aspect, the twelfth aspect, or the thirteenth aspect, or an apparatus included in the first access network device, for example, a chip or a chip system; the communication apparatus may be the first NCR in the fourth aspect, the fifth aspect, the sixth aspect, or the eleventh aspect, or an apparatus included in the first NCR, for example, a chip or a chip system; or the communication apparatus may be the mobility management network element in the seventh aspect, or an apparatus included in the mobility management network element, for example, a chip or a chip system.

According to a sixteenth aspect, a communication apparatus is provided, including a processor and a communication interface. The communication interface is configured to receive and/or send a signal, and the processor is configured to execute a computer program or instructions, to enable the communication apparatus to perform the method according to any one of the foregoing aspects. The communication apparatus may be the first terminal device in the first aspect, or an apparatus included in the first terminal device, for example, a chip or a chip system; the communication apparatus may be the first access network device in the second aspect, the third aspect, the eighth aspect, the ninth aspect, the tenth aspect, the twelfth aspect, or the thirteenth aspect, or an apparatus included in the first access network device, for example, a chip or a chip system; the communication apparatus may be the first NCR in the fourth aspect, the fifth aspect, the sixth aspect, or the eleventh aspect, or an apparatus included in the first NCR, for example, a chip or a chip system; or the communication apparatus may be the mobility management network element in the seventh aspect, or an apparatus included in the mobility management network element, for example, a chip or a chip system.

According to a seventeenth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first terminal device in the first aspect, or an apparatus included in the first terminal device, for example, a chip or a chip system; the communication apparatus may be the first access network device in the second aspect, the third aspect, the eighth aspect, the ninth aspect, the tenth aspect, the twelfth aspect, or the thirteenth aspect, or an apparatus included in the first access network device, for example, a chip or a chip system; the communication apparatus may be the first NCR in the fourth aspect, the fifth aspect, the sixth aspect, or the eleventh aspect, or an apparatus included in the first NCR, for example, a chip or a chip system; or the communication apparatus may be the mobility management network element in the seventh aspect, or an apparatus included in the mobility management network element, for example, a chip or a chip system.

According to an eighteenth aspect, a computer-readable storage medium is provided. The computer-readable storage medium stores a computer program or instructions. When the computer program or instructions are run on a communication apparatus, the communication apparatus is enabled to perform the method according to any one of the foregoing aspects.

According to a nineteenth aspect, a computer program product including instructions is provided. When the computer program product runs on a communication apparatus, the communication apparatus is enabled to perform the method according to any one of the foregoing aspects.

According to a twentieth aspect, a communication apparatus (for example, the communication apparatus may be a chip or a chip system) is provided. The communication apparatus includes a processor, configured to implement a function in any one of the foregoing aspects.

In some possible designs, the communication apparatus includes a memory, and the memory is configured to store necessary program instructions and data.

In some possible designs, when the apparatus is the chip system, the apparatus may include a chip, or may include the chip and another discrete component.

It may be understood that, when the communication apparatus provided in any one of the fourteenth aspect to the twentieth aspect is a chip or a chip system, a sending action/function of the communication apparatus may be understood as outputting information, and a receiving action/function of the communication apparatus may be understood as inputting information.

For technical effects brought by any one of the designs of the fourteenth aspect to the twentieth aspect, refer to the technical effects brought by different designs of the first aspect to the thirteenth aspect. Details are not described herein again.

### BRIEF DESCRIPTION OF DRAWINGS

FIG. 1 is a diagram of a communication scenario in which an NCR is deployed according to this application;
FIG. 2 is a diagram of a structure of an NCR according to this application;
FIG. 3 is a schematic flowchart of initial access of an IAB-node or an NCR according to this application;
FIG. 4 is a schematic flowchart of access control in an NPN according to this application;
FIG. 5 is a diagram of a structure of a communication system according to this application;
FIG. 6 is a schematic flowchart of a communication method according to this application;
FIG. 7 is a schematic flowchart of a communication method according to this application;
FIG. 8 is a schematic flowchart of a communication method according to this application;
FIG. 9 is a schematic flowchart of cell handover according to this application;
FIG. 10 is a schematic flowchart of a communication method according to this application;
FIG. 11 is a schematic flowchart of a communication method according to this application;
FIG. 12 is a schematic flowchart of initial access according to this application;
FIG. 13 is a schematic flowchart of a communication method according to this application;
FIG. 14 is a schematic flowchart of a communication method according to this application;
FIG. 15 is a schematic flowchart of a communication method according to this application;
FIG. 16 is a diagram of a structure of a communication apparatus according to this application;
FIG. 17 is a diagram of a structure of another communication apparatus according to this application;
FIG. 18 is a schematic flowchart of a communication method according to this application;
FIG. 19 is a diagram of data plane protocol stacks of an OAM server and an NCR according to this application;
FIG. 20 is a schematic flowchart of a communication method according to this application; and
FIG. 21 is a schematic flowchart of a communication method according to this application.

### DESCRIPTION OF EMBODIMENTS

In descriptions of this application, unless otherwise specified, "/" represents an "or" relationship between associated objects. For example, A/B may represent A or B. In this application, "and/or" merely describes an association relationship between associated objects and indicates that three relationships may exist. For example, A and/or B may represent three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of a single item (piece) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "exemplary", "for example", or the like represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of various processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, for same or similar parts in embodiments, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding of the technical solutions in embodiments of this application, related technologies of this application are first briefly described below.

### 1. Radio frequency (radio frequency, RF) repeater (repeater):

Coverage is a basic function of a cellular network. Deployment of a relay node in an area with poor signal coverage can expand a network coverage area. As a non-regenerative relay node, the radio frequency repeater may amplify and forward a received signal, and has advantages such as low costs, a simple structure, easy deployment, low power consumption, and low maintenance costs. Based on these advantages, deployment of the radio frequency repeater has become a simplest and most cost-effective solution for improving network coverage. Therefore, the radio frequency repeater has been widely deployed in 2nd generation (2nd generation, 2G), 3rd generation (3rd generation, 3G), and 4th generation (4th generation, 4G) mobile communication systems.

It should be noted that the "repeater" in this application may also be referred to as the "repeater", and the two descriptions may be replaced with each other.

### 2. New radio (new radio, NR) repeater:

A 5th generation (5th generation, 5G) mobile communication system uses a spectrum resource with a higher frequency band to obtain a wider transmission bandwidth. However, due to a propagation characteristic of a high-frequency radio, a path loss and a penetration loss of the high-frequency radio are very great. As a result, it is difficult to expand a coverage area, and a dead point also exists even in the coverage area. Therefore, a relay system is more needed to expand the coverage area. The NR repeater (also referred to as a 5G RF repeater) is a repeater introduced into the 5G system. The NR repeater usually includes only a radio unit (radio unit, RU).

The NR repeater may support frequency division duplex (frequency division duplex, FDD) or time division duplex (time division duplex, TDD) of a 5G frequency range 1 (frequency range 1, FR1) frequency band, and a frequency range 2 (frequency range 2, FR2) frequency band.

In addition, the 5G system further supports technologies such as dynamic TDD, a bandwidth part (bandwidth part, BWP), massive multi-input multi-output, and hybrid beamforming (beamforming, BF). Therefore, the NR repeater has a much different capability than before.

Based on the discussion of a current 3rd generation partnership project (3rd generation partnership project, 3GPP) standard, the NR repeater does not perform adaptive beamforming on a user access side, and usually uses static beamforming in a fixed direction. In this solution, performance is poor when a terminal device on an access side encounters strong interference.

### 3. Network controlled repeater (network controlled repeater, NCR):

The NCR is also referred to as an intelligent repeater. The NCR may obtain effective control information such as timing (timing) information, spatial beam information, bandwidth information, and switching information, and implement functions such as uplink and downlink sensing, dynamic TDD, a configurable bandwidth, beam sensing, access-side BF, uplink/downlink (downlink/uplink, DL/UL) forwarding power control, and dynamic switching.

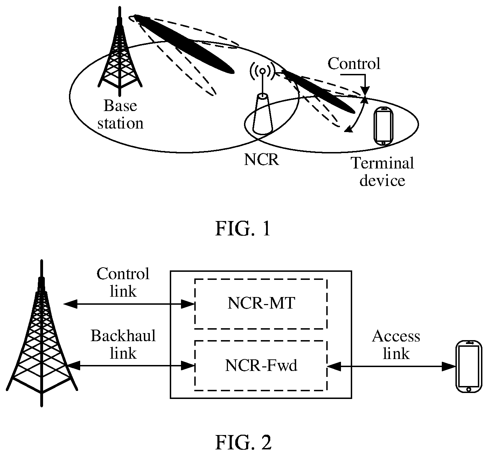

For example, as shown in FIG. 1, the NCR may implement adaptive BF on a user access side, and can provide a better relay for communication between a terminal device and a base station. In an FR2 frequency band, the NCR having an adaptive BF capability can implement easy and efficient area deployment.

The NCR is different from a common repeater in terms of an architecture. As shown in FIG. 2, the NCR includes an RU module and a mobile terminal (mobile terminal, MT) module. The RU module of the NCR is also referred to as a forwarding (forwarding) module, and is usually denoted as an NCR-Fwd. The NCR-Fwd has a function of transparently amplifying and forwarding a physical layer signal without any protocol stack processing. The MT module of the NCR is usually denoted as an NCR-MT, and is configured to receive and feed back base station control signaling.

A link between the NCR-Fwd and a terminal device is referred to as an access link (access link), and a link between the NCR-Fwd and a base station is referred to as a backhaul link (backhaul link). A link between the NCR-MT and the base station is referred to as a control link (control link). The control link is the same as a radio resource control (radio resource control, RRC) connection between a common terminal device and the base station. In other words, the NCR-MT has protocol functions of an RRC layer and each layer below the RRC layer, that is, the NCR-MT has protocol functions of the RRC layer, a radio link control (radio link control, RLC) layer, a medium access control (medium access control, MAC) layer, and a physical (physical, PHY) layer.

The base station may send control information (for example, a beam direction and power control) of the NCR-Fwd to the NCR-MT. For example, the base station may send the control information to the NCR-MT by using an RRC message, a MAC control element (control element, CE), or the like. After receiving the control information, the NCR-MT controls the NCR-Fwd to perform a corresponding operation. In other words, a "network control" function in the NCR is mainly reflected in interaction between the base station and the NCR-MT. The NCR-Fwd is a controlled object and has a simple function.

### 4. Integrated access and backhaul (integrated access and backhaul, IAB):

An IAB network includes an IAB-node (IAB-node, also referred to as a relay node) and an IAB-donor (IAB-donor). The IAB-node may provide a wireless access service for user equipment (user equipment, UE), and service data of the UE is sent by the IAB-node to the IAB-donor through a wireless backhaul link. The IAB-node may access the IAB-donor or may be connected to the IAB-donor through another IAB-node.

The IAB-node may include at least one mobile terminal (mobile terminal, MT) and at least one distributed unit (distributed unit, DU).

When the IAB-node is oriented to a parent node (where the parent node may be the IAB-donor or another IAB-node) of the IAB-node, the IAB-node may be used as a terminal device, that is, a terminal role of the IAB-node. In this case, an MT function or an MT entity provides the terminal role for the IAB-node. When the IAB-node is oriented to a child node (where the child node may be another IAB-node or common UE) of the IAB-node, the IAB-node may be used as a network device, that is, a network device role of the IAB-node. In this case, a DU function or a DU entity provides the network device role for the IAB-node.

The IAB-donor is an access network element having a complete base station function. The IAB-donor may include one central unit (central unit, CU) and at least one distributed unit (distributed unit, DU). An interface between the CU and the DU is an F1 interface. The IAB-donor is connected to a core network that serves the UE.

For ease of description, in the following embodiments of this application, an MT of the IAB-node is referred to as an IAB-MT for short, and a DU of the IAB-node is referred to as an IAB-DU for short. One transmission path between the terminal device and the IAB-donor may include one or more IAB-nodes. Each IAB-node needs to maintain a wireless backhaul link (backhaul link, BL) oriented to a parent node and a wireless link oriented to a child node. If a child node of an IAB-node is a terminal device, a wireless link between the IAB-node and the child node (namely, the terminal device) is a wireless access link (access link, AL). If a child node of an IAB-node is another IAB-node, a wireless link between the IAB-node and the child node (namely, the another IAB-node) is a wireless backhaul link.

Based on the foregoing descriptions, it is not difficult to learn that that similarities between the NCR and the IAB are as follows: From a perspective of functions, both the NCR and the IAB are relays, and can improve network coverage; and from a perspective of UE, the UE senses neither existence of the NCR nor existence of the IAB-node. In the IAB, the UE does not distinguish between the IAB-DU and a DU of another common base station. It is considered that the UE accesses a network provided that the UE accesses a DU, and a backhaul link of the IAB is invisible to the UE. In the NCR, the UE does not sense existence of the NCR. The NCR-Fwd transparently amplifies and forwards a physical signal, and is invisible to the UE. The NCR-MT is used by a network side to control the NCR-Fwd, and is also invisible to the UE.

### Differences between the NCR and the IAB are as follows:

From a perspective of hop counts, the IAB is more complex, and supports functions such as multi-hop, dual connectivity, and IAB-node mobility. The NCR is a single-hop fixed relay.

From a perspective of architectures, the IAB-node includes a DU, and has a function of a higher layer protocol stack. A new cell may be generated by the DU. A cell served by the IAB-DU may be configured by a donor-CU through an F1 interface. A cell (serving the UE) generated by the IAB-DU and a parent node cell accessed by the IAB-MT are two cells. The donor-CU separately configures the two cells. However, the NCR-Fwd does not generate a new cell, but only amplifies and forwards an existing cell signal. Cell-level configuration (for example, cell identifier configuration) cannot be performed on the NCR-Fwd, and only physical signal-level configuration (for example, beam direction control) can be performed on the NCR-Fwd.

From a perspective of connection relationships, the backhaul link of the IAB-node is on the IAB-MT, and all data transmitted between the IAB-DU and the parent node and between the IAB-DU and the IAB-donor needs to pass through the IAB-MT. However, in the NCR, the backhaul link of the NCR exists between the NCR-Fwd and the base station, and the control link of the NCR-MT, rather than the backhaul link, exists between the NCR-MT and the base station.

### 5. Initial access procedure of an IAB-MT:

The initial access procedure of the IAB-MT is similar to an initial access procedure of common UE. For the common UE, the initial access procedure generally includes the following steps.

### (1) Search for a frequency.

When being powered on, if the UE has not stored cell frequency information (for example, in a scenario in which the UE is powered on for the first time in a cell), the UE scans all frequencies on supported frequency bands. If the UE has stored previously found cell frequency information (for example, in a scenario in which the UE is powered off and then powered on again in a cell), the UE searches for previously stored cell frequencies.

For example, a base station (for example, a next generation NodeB (generation NodeB, gNB)) sends a synchronization signal and physical broadcast channel (physical broadcast channel, PBCH) block (synchronization signal and PBCH block, SSB) of each cell on a corresponding frequency of the cell. The UE can select an SSB with best signal quality through scanning.

The SSB includes a primary synchronization signal (primary synchronization signal, PSS), a secondary synchronization signal (secondary synchronization signal, SSS), and a PBCH.

For example, the SSB may be carried by using an SSB beam. Therefore, in this embodiment of this application, sending the SSB by the base station may alternatively be understood as sending the SSB beam, and receiving the SSB by the UE may alternatively be understood as receiving the SSB beam. The SSB and the SSB beam may be replaced with each other. In spatial domain, both sending and receiving of the SSB are periodically scanned.

### (2) Obtain a physical cell identifier (physical cell identifier, PCI) and a master information block (master information block, MIB).

For example, the UE may determine the PCI based on the PSS and the SSS in the SSB selected by the UE in step (1). The PCI and the frequency may uniquely identify a cell. Therefore, after determining the PCI, the UE may learn of the cell selected by the UE. In addition, the UE may further decode the PBCH in the SSB to obtain the MIB of the cell. The MIB defines most-basic system information of the cell and parameters needed for obtaining a system information block 1 (system information block 1, SIB 1).

### (3) Obtain the SIB 1.

For example, the MIB includes time-frequency position information of a physical downlink control channel (physical downlink control channel, PDCCH). After reading the MIB, the UE may monitor the PDCCH at a corresponding time-frequency position, and read downlink control information (downlink control information, DCI) in the PDCCH. The DCI indicates a time-frequency position of a physical downlink shared channel (physical downlink shared channel, PDSCH) carrying the SIB 1, so that the UE may receive the PDSCH at the corresponding time-frequency position, to receive the SIB 1.

### (4) Select a public land mobile network (public land mobile network, PLMN) and initiate random access.

The PLMN may be understood as an identifier (identifier, ID) of an operator, and different PLMN values correspond to different operators. The UE may select a corresponding operator network (namely, a PLMN) based on subscription information.

For example, the SIB 1 includes a PLMN supported by a cell. After obtaining the SIB 1, the UE may learn of the PLMN supported by the current cell. If the PLMN supported by the current cell includes the PLMN selected by the UE, the UE initiates random access in the current cell. A random access channel configuration needed for random access is included in the SIB 1. If the current cell does not support the PLMN selected by the UE, the UE goes back to step (1) to reselect another SSB, so as to select another cell.

### (5) Set up an RRC connection, register with a core network, and set up a UE context.

For example, a random access procedure includes an RRC connection setup process between the UE and the base station. After the random access ends, the UE may send an RRC setup complete (RRCSetupComplete) message to the base station, where the RRC setup complete message carries the PLMN selected by the UE in step (4) for a network side to verify whether the UE is authorized.

After receiving the RRC setup complete message, the base station queries an access and mobility management function (access and mobility management function, AMF) network element corresponding to the PLMN selected by the UE, and sends an NG interface message, for example, an initial UE message (INITIAL UE MESSAGE), to the AMF network element, where the NG interface message carries an identifier and capability information of the UE. After receiving the NG interface message, the AMF network element and another core network element complete UE authentication, non-access stratum (non-access stratum, NAS) security registration, and the like, and set up the UE context on a core network side. An NG interface may be an interface between a radio access network and a core network, for example, an interface between a gNB (or a CU) and the AMF network element.

Then, the AMF network element sends an initial context setup request (INITIAL CONTEXT SETUP REQUEST) message to the base station, to set up a UE context on a radio access network (radio access network, RAN) side. In addition, the base station configures a signaling radio bearer (signaling radio bearer, SRB) and a data radio bearer (data radio bearer, DRB) for the UE. In this case, the UE may set up a protocol data unit (protocol data unit, PDU) session with the core network based on a service requirement, to perform data transmission.

A difference between the initial access procedure of the IAB-MT and the initial access procedure of the common UE lies in that after selecting a PLMN, the IAB-MT further needs to read an IAB-support (iab-support) information element in the SIB 1, where the information element indicates whether a cell supports access of the IAB-MT. The iab-support information element is of an enumeration type and includes two cases: present (indicating that the cell supports the access of the IAB-MT) and absent (indicating that the cell does not support the access of the IAB-MT).

The iab-support information element is configured at a granularity of a PLMN (namely, per PLMN). In the SIB 1, an iab-support value of each PLMN supported by a cell is configured. In the initial access procedure, the common UE ignores the iab-support information element, and the IAB-MT reads an iab-support information element corresponding to a PLMN selected by the IAB-MT. If a value of the iab-support information element is present, the IAB-MT may select a current cell for access. If a value of the iab-support information element is absent, the IAB-MT may reselect another cell. For example, a reason why a cell does not support an IAB service may be that the donor-CU is not upgraded to a CU that supports an IAB capability, or may be that an operator does not expect to support the IAB service in the cell from a perspective of deployment.

In a scenario in which one cell belongs to (or supports) only one operator (one PLMN), effect of configuring the iab-support information element at a granularity of a PLMN is the same as that of configuring the iab-support information element at a granularity of a cell (namely, per cell). However, in a RAN sharing (namely, RAN sharing) scenario, a plurality of operators are co-sited. One cell may belong to (or support) a plurality of operators (PLMNs), that is, the cell may support access of UE of the plurality of operators. In this case, the iab-support information element is configured at a granularity of a PLMN, so that different operators can independently determine whether the operators support an IAB service, that is, whether the operators support access of an IAB-MT.

For example, a cell is shared by two operators: an operator 1 (a PLMN 1) and an operator 2 (a PLMN 2), that is, the cell supports the PLMN 1 and the PLMN 2. If the operator 1 expects UE that selects the operator 1 to enjoy an IAB service of the cell, and the operator 2 does not expect to or is not allowed to support the IAB service in the cell, an iab-support information element of the PLMN 1 may be set to present, and an iab-support information element of the PLMN 2 may be set to absent. In this way, only an IAB-MT of the operator 1 can access the cell. In addition, the donor-CU may further control a SIB 1 broadcast by the IAB-DU in a cell generated by the IAB-DU to indicate that the cell supports only the PLMN 1. In this way, only UE that selects the PLMN 1 can perform access via the IAB-DU and enjoy the IAB service.

It may be understood that, if the SIB 1 broadcast by the IAB-DU in the cell generated by the IAB-DU indicates that the cell supports the PLMN 1 and the PLMN 2, UE that selects the PLMN 2 may also perform access via the IAB-DU, and enjoy the IAB service. Therefore, the SIB 1 broadcast by the IAB-DU needs to be restricted to indicate that the cell supports only the PLMN 1.

The IAB has been introduced into 3GPP release (release, R) 16, and the IAB-node is similar to the NCR. Therefore, in the research of an R-18 NCR subject, the IAB is usually used as a baseline for research. For example, in the RAN2 #120 meeting, it is agreed to introduce an NCR-support information element, the NCR-support information element is configured at a granularity of a PLMN, and the initial access procedure of the IAB-MT is still used on the NCR.

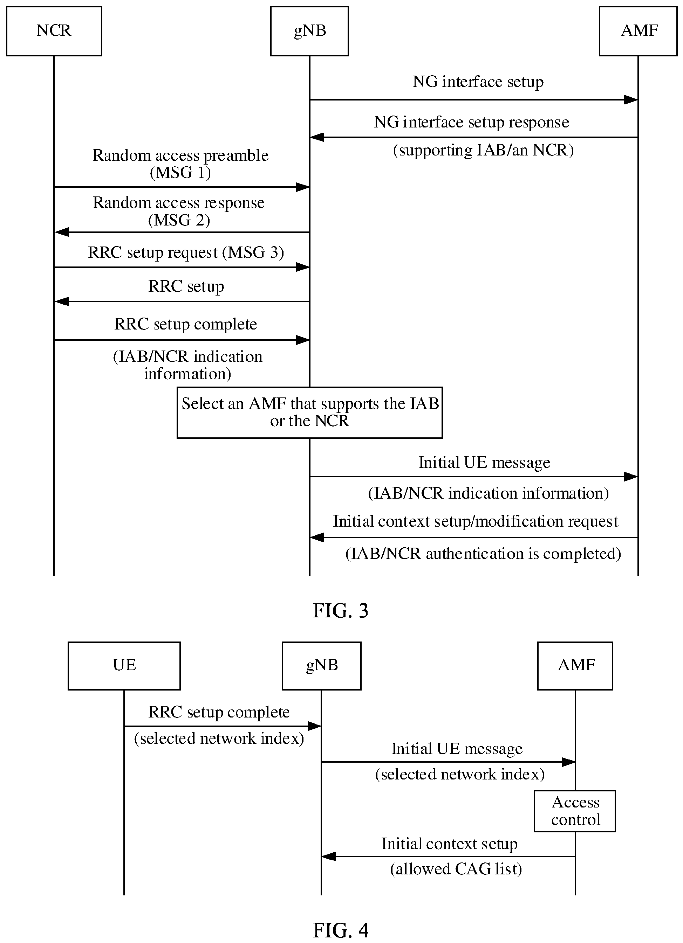

In addition, as shown in FIG. 3, differences between initial access of the IAB-MT and the NCR and the initial access of the common UE are as follows:

An AMF network element may include, in an NG interface setup response (NG SETUP RESPONSE) message in an NG interface setup process, an indication indicating whether the AMF network element supports an IAB or NCR function, so that when selecting an AMF network element for an IAB-MT or an NCR-MT, a gNB may select an AMF network element that supports the IAB or NCR function.

The IAB-MT or the NCR-MT may include IAB or NCR indication information in an RRC setup complete message, to indicate the IAB-MT or the NCR-MT. An initial UE message (INITIAL UE MESSAGE) sent by the gNB to the AMF network element also carries the IAB or NCR indication information.

After a core network completes authentication, when the AMF network element sends an initial context setup request (INITIAL CONTEXT SETUP REQUEST) message to the gNB to request to set up a UE context on a RAN side, or sends a UE context modification request (CONTEXT MODIFICATION REQUEST) message to the gNB to request to modify the UE context on the RAN side, the initial context setup request message or the UE context modification request message also carries the IAB or NCR indication information, to indicate, to the RAN side, that authentication on the IAB-MT or NCR-MT has been completed.

It should be noted that FIG. 3 merely provides an example of a general procedure in which the IAB-MT or the NCR-MT performs initial access. The initial access procedure of the IAB-MT or the NCR-MT is not limited to being definitely as shown in FIG. 3 in this application, and may include more or fewer steps than those in FIG. 3.

### 6. Non-public network (non-public network, NPN):

The purpose of introducing the NPN is to implement some functions of the non-public network (namely, a "private network") via a public network (a PLMN) of an operator. An identity of the NPN includes an identity of a PLMN and an identity of a closed access group (closed access group, CAG). The CAG is a layer of identity under the PLMN, and one PLMN may include a plurality of CAGs.

For example, a typical NPN is an enterprise campus network or a campus network. A related unit (for example, a university A) may cooperate with an operator to configure cells of some base stations in the unit as CAG-cells or CAG-only cells. The CAG-cell allows access of UE of a common PLMN and corresponding CAG UE (for example, UE into which a customized subscriber identity module (subscriber identity module, SIM) card of the university A is inserted), and does not allow access of another CAG UE (for example, UE into which a customized SIM card of a university B is inserted). The CAG-only cell allows access of only corresponding CAG UE, and does not allow access of UE of a common PLMN and another CAG UE. This is a stricter access control.

CAG information (for example, an allowed CAG list) that allows access of UE belongs to subscription information of the UE, and is bound to a SIM card of the UE. The information may be modified by a core network. A related modification operation is configured by the core network for the UE, and a RAN side does not parse the information.

In the NPN, a PLMN information element of a SIB 1 may include a CAG information element, and the CAG information element indicates a plurality of CAGs included in the PLMN. UE (which may be referred to as CAG UE or NPN UE) configured with an allowed CAG list adds a CAG selection process when selecting a PLMN. When CAGs of a PLMN include a CAG corresponding to the UE, the UE selects the PLMN.

UE (namely, common UE) not configured with the allowed CAG list reads a cellReservedForOtherUse information element in the SIB 1. If a cell is the CAG-only cell, this field is set to true. If a cell is the CAG cell, this field is set to false. If learning that the cellReservedForOtherUse information element is set to true, the common UE considers that a current cell is a cell reserved for other UE and the common UE does not access the cell. When learning that the cellReservedForOtherUse information element is set to false, the common UE ignores determining of the CAG and continues to perform PLMN selection, that is, the UE may access the CAG cell as common PLMN UE.

For example, Table 1 shows an example of PLMN and CAG information broadcast by a cell. It can be learned from Table 1 that the cell is the CAG-cell, but is not the CAG-only cell, because a PLMN 1 and a PLMN 2 each have an entry in which a CAG ID is empty (represented by using -).

**Table 1**

| Network index (Network Index) | PLMN ID | CAG ID | Readable network name (Human Readable Network Name) |
|---|---|---|---|
| 1 | PLMN 1 | - | - |
| 2 | PLMN 2 | - | - |
| 3 | PLMN 1 | CAG 1 | Hospital |
| 3 | PLMN 1 | CAG 2 | Bank |
| 4 | PLMN 2 | CAG 3 | Shop |
| 5 | PLMN 3 | CAG 4 | Mall |

In the NPN, a network side needs to perform access control to prevent malicious UE from not complying with a rule. As shown in FIG. 4, UE may include, in an RRC setup complete message, a network index selected by the UE, and a gNB may send the network index to an AMF network element in an initial UE message, so that the AMF network element performs access control. For example, the AMF network element may obtain an allowed CAG list of the UE from a unified data management (unified data management, UDM) network element, and determine whether a CAG ID corresponding to the network index selected by the UE is in the allowed CAG list of the UE.

If the CAG ID is in the allowed CAG list of the UE, the check succeeds, and the allowed CAG list of the UE is sent to the gNB in an initial context setup request message, so that the gNB exchanges CAG information of the UE with a target base station in a cell handover process of the UE. If the CAG ID is not in the allowed CAG list of the UE, the AMF network element rejects access of the UE.

In other words, in the NPN, when the UE expects to access the CAG-cell or the CAG-only cell, both the UE and the AMF network element need to determine a CAG-related constraint condition, and only UE that meets the CAG-related constraint condition can access the CAG-cell or the CAG-only cell.

In the IAB of R16, it is considered that the IAB-MT may also support an NPN function, and the IAB-MT also needs to consider a CAG constraint condition during access. Based on this, only a specific IAB-node (for example, an IAB-node purchased by a unit) can access the CAG-only cell. In the current NCR discussion, it is also considered that the NCR-MT may support the NPN function.

### 7. RRC idle (RRC_IDLE) state:

If UE does not perform service transmission for long time, the UE enters the RRC idle state. For UE in the RRC idle state, both a RAN side and a core network side release a context of the UE.

When UE expects to perform service transmission, the UE may initiate an RRC connection setup request to actively return to an RRC connected state. Alternatively, when a core network receives a service request of the UE, the core network may trigger a paging (paging) message to wake up the UE to the RRC connected state.

A 5G system is used as an example. In the paging message, the UE may be identified by using a 5G system temporary mobile subscriber identity (5G S-temporary mobile subscriber identity, 5G-S-TMSI) of the UE. The 5G-S-TMSI is initially generated by the UE. The UE reports the 5G-S-TMSI of the UE to a gNB in an RRC setup process, and then the gNB reports the 5G-S-TMSI to the core network.

For security purposes, a value of the 5G-S-TMSI of the UE is not permanent and may change. A new 5G-S-TMSI value is generated by an AMF network element and notified to the UE by using a NAS message. The RAN side does not parse the new 5G-S-TMSI value.

Currently, in the discussion of NCR standard, to implement NCR energy saving, it is being considered that the gNB may release an NCR-MT to an RRC idle state when the gNB does not need to frequently send control information to the NCR-MT. In this case, the NCR is degraded to the NR repeater, and does not receive network control any more. The NCR-Fwd may continue to operate based on a latest configuration, that is, the NCR-Fwd operates based on a fixed configuration.

### 8. NG interface application protocol (next generation application, NGAP) ID:

A UE NGAP ID identifies UE to which an NG interface message is associated. For example, the UE NGAP ID includes an AMF UE NGAP ID allocated by an AMF network element and a RAN UE NGAP ID allocated by a RAN side.

When UE performs initial access, a first NG interface message (for example, an initial UE message INITIAL UE MESSAGE) of the UE sent by a gNB to the AMF network element carries the RAN UE NGAP ID. Then, the AMF network element allocates the AMF UE NGAP ID to the UE, and includes a mapping relationship between the AMF UE NGAP ID and the RAN UE NGAP ID in an initial context setup request message sent to the gNB.

Then, when the gNB and the AMF network element exchange a message of the UE again, both the gNB and the AMF network element need to carry the AMF UE NGAP ID and/or the RAN UE NGAP ID, to identify the UE associated with the message.

As mentioned above, currently, the IAB is usually used as a baseline for NCR research, and a related implementation of the IAB-node is used on the NCR. However, a difference between the NCR and the IAB-node makes it impossible to copy the related implementation of the IAB-node for the NCR completely. An example is as follows:

Similar to iab-support, configuring NCR-support at a granularity of a PLMN cannot enable only UE that selects a specific PLMN to enjoy an NCR service. This is because the NCR-Fwd transparently amplifies and forwards only a physical signal and cannot distinguish between PLMNs. For example, in a SIB 1, NCR-support of a PLMN 1 is set to present, and NCR-support of a PLMN 2 is set to absent. In this case, although an NCR-MT of the PLMN 1 is allowed to access a network and an NCR-MT of the PLMN 2 is prevented from accessing the network, an NCR of the PLMN 1 cannot reject access of UE that selects the PLMN 2 via the NCR. In other words, the UE that selects the PLMN 2 finally still enjoys a service of the NCR.

However, in the IAB, a reason why only UE in a specific PLMN can enjoy the IAB service is that the IAB-node has a DU, and the donor-CU may control the IAB-DU to broadcast that a PLMN supported by a cell is a PLMN that allows an IAB-MT to access, so as to restrict UE that selects another PLMN to access the IAB-DU.

In other words, in an NCR scenario, how to allow UE that selects some PLMNs to perform access via an NCR and reject access, via the NCR, of UE that selects another PLMN is a problem to be urgently resolved currently.

In addition, the NCR-Fwd does not generate a new cell like the IAB-DU, and is only configured to transparently amplify and forward a physical signal. Even if an NCR-MT that does not meet the NPN constraint condition is allowed to access a CAG-only cell (for example, an NCR-MT for which no allowed CAG list is configured accesses the CAG-only cell), an NPN access control result of any UE is not changed (because NPN access control is implemented by the AMF network element). In addition, if the NCR-MT needs to determine the NPN constraint condition during access, production costs and complexity of the NCR are increased, and an NCR including a specific MT needs to be produced for a specific NPN cell. This is not conducive to wide deployment of the NCR.

In addition, for UE in an RRC idle state, currently, paging needs to be triggered via a core network to wake up the UE, and a gNB cannot wake up the UE from the RRC idle state. Therefore, when the gNB actively releases the NCR-MT to the RRC idle state, the gNB cannot wake up the NCR-MT in the RRC idle state again. Consequently, the gNB cannot re-control the NCR.

Based on the foregoing analysis, this application provides a communication method, to design a related implementation of an NCR, so as to facilitate normal operation of the NCR.

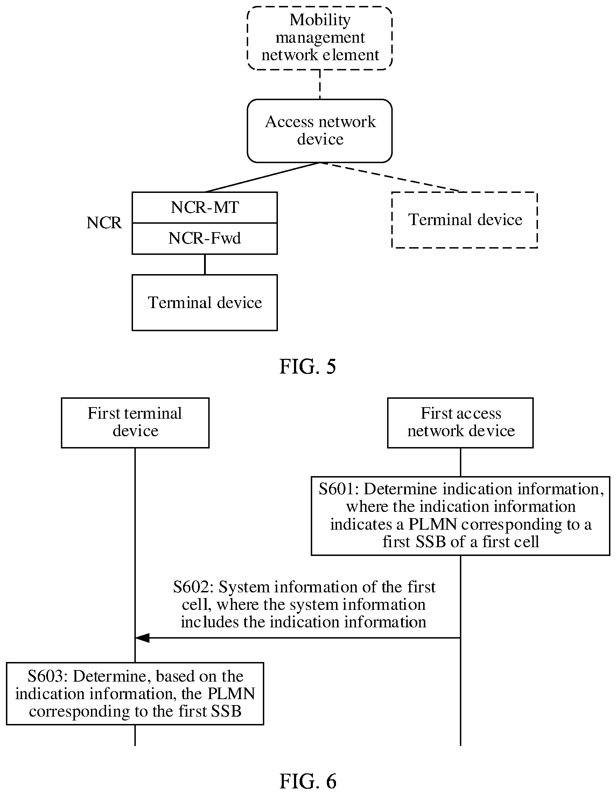

FIG. 5 is a diagram of a structure of a communication system to which a method according to this application is applicable. The communication system includes at least one access network device, at least one repeater, and at least one terminal device. Optionally, the communication system may further include a mobility management network element.

Optionally, the repeater is deployed in a cell of the access network device, and the access network device may control the repeater. The repeater may be configured to improve a coverage area of the access network device, for example, amplify and forward a signal. The terminal device may communicate with the access network device through the repeater, or may directly communicate with the access network device through an air interface.

For example, in this embodiment of this application, a cell served by the access network device may alternatively be understood as a cell managed by the access network device, and the two descriptions may be replaced with each other.

Optionally, the repeater may be an NCR, or may be a derivative device of the NCR, for example, a relay device that supports fewer or more functions than that supported by the NCR. In this embodiment of this application and FIG. 5, an example in which the repeater is the NCR is used for description.

Optionally, the access network device is a device that connects the terminal device to a wireless network. The access network device may be a node in a RAN, and may be referred to as a base station or may be referred to as a radio access network node (or device).

For example, the access network device may include an evolved NodeB (NodeB or eNB or e-NodeB, evolutional NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the access network device may include a next generation NodeB (next generation NodeB, gNB) in an NR system. Alternatively, the access network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the access network device may include a base station in a non-terrestrial network (non-terrestrial network, NTN), that is, may be deployed on an airplane platform or a satellite. In the NTN, the access network device may be used as a layer 1 (L1) relay (relay), may be used as a base station, or may be used as an integrated access and backhaul (integrated access and backhaul, IAB) node. Alternatively, the access network device may be a device that implements a function of a base station in an internet of things (internet of things, IoT), for example, a device that implements a function of a base station in uncrewed aerial vehicle communication, vehicle to everything (vehicle to everything, V2X), device to device (device to device, D2D), or machine to machine (machine to machine, M2M).

Alternatively, the access network device may be a module or unit that can implement some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, the access network device may be an access network device or a module of the access network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

Optionally, the CU and the DU may be obtained through division based on protocol layers of a wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are set on the CU, and functions of a protocol layer (for example, a radio link control (radio link control, RLC) layer, a media access control (media access control, MAC) layer, or a physical (physical, PHY) layer) below the PDCP layer are set on the DU. For another example, functions of a protocol layer above the PDCP layer are set on the CU, and functions of the PDCP layer and a protocol layer below the PDCP layer are set on the DU. This is not limited.

The division into processing functions of the CU and the DU based on the protocol layers is merely an example, and may alternatively be another division manner. For example, the CU or the DU may have functions of more protocol layers through division. For another example, the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU.

Optionally, the terminal device in embodiments of this application may be a user-side device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in the 5G network or a future evolved PLMN after the 5G network. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a robot, a smart point of sale (point of sale, POS) machine, customer premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in IoT, for example, a terminal (for example, an internet of vehicles device) in V2X, a terminal in D2D communication, or a terminal in M2M communication. The terminal may be mobile or fixed.

Optionally, the mobility management network element is mainly responsible for a signaling processing part, for example, functions such as access control, mobility management, attachment and detachment, and gateway selection. In a 5G communication system, the mobility management network element may be an AMF network element. In a future communication system, the mobility management network element may still be the AMF network element, or may have another name. This is not limited in this embodiment of this application.

With reference to the accompanying drawings, the following describes the method provided in embodiments of this application. It may be understood that in embodiments of this application, an execution body may perform some or all of steps in embodiments of this application. The steps or operations are merely examples. In embodiments of this application, other operations or variations of the operations may be further performed. In addition, the steps may be performed in a sequence different from a sequence presented in embodiments of this application, and not all the operations in embodiments of this application may be performed.

It should be noted that, in the following embodiments of this application, names of messages between functions or entities, names of various pieces of information in messages, or the like are merely examples, and there may be other names in specific implementation. This is not specifically limited in embodiments of this application.

FIG. 6 shows a communication method according to an embodiment of this application. The communication method includes the following steps.

S601: A first access network device determines indication information.

The indication information indicates a PLMN corresponding to a first SSB of a first cell. For example, the first cell may be a cell served by the first access network device.

Optionally, an NCR may be deployed in a coverage area of the first cell. For ease of description, in this embodiment, the NCR deployed in the coverage area of the first cell is referred to as a first NCR.

Optionally, there may be N SSBs in the first cell, and N is a positive integer greater than or equal to 1. Each of the N SSBs corresponds to one SSB index (index), and different SSBs correspond to different SSB indexes. The SSB index may indicate a direction of an SSB beam. To be specific, in the N SSBs, directions of SSB beams corresponding to different SSBs are different.

Optionally, the first SSB may be any SSB of the first cell, or the first SSB may be an SSB that can be forwarded by the first NCR. The SSB that can be forwarded by the first NCR may alternatively be understood as an SSB that can be received by the first NCR, or that the first NCR can forward at least one SSB may alternatively be understood as that the first NCR is deployed in a beam range of an SSB beam corresponding to the at least one SSB. For example, as shown in FIG. 1, an NCR is deployed at a specific location, and can receive only some SSBs of a cell. Therefore, the NCR can forward only the SSBs received by the NCR.

Optionally, for example, the first SSB is the SSB that can be forwarded by the first NCR. In addition to the first SSB, the indication information may further indicate a PLMN corresponding to another SSB that can be forwarded by the first NCR. For example, SSBs that can be forwarded by the first NCR includes an SSB 1 and an SSB 2, and the indication information may respectively indicate a PLMN corresponding to the SSB 1 and a PLMN corresponding to the SSB 2.

Optionally, for example, the first SSB is any SSB of the first cell. In addition to the first SSB, the indication information may further indicate a PLMN corresponding to another SSB of the first cell. For example, N is equal to 8, and the indication information may indicate a PLMN corresponding to each of the eight SSBs of the first cell.

Optionally, that an SSB corresponds to a PLMN may be understood as that the SSB supports a terminal device that selects the PLMN in performing initial access. For example, the terminal device that selects the PLMN may perform random access based on a random access-related configuration such as a random access resource configured in the SSB.

In other words, the first SSB is used as an example. If the PLMN corresponding to the first SSB includes a first PLMN, the first SSB supports a terminal device that selects the first PLMN in performing initial access. If the PLMN corresponding to the first SSB does not include a first PLMN, the first SSB does not support a terminal device that selects the first PLMN in performing initial access.

Optionally, one SSB may correspond to at least one PLMN. The indication information may include an identifier of an SSB and an identity of a PLMN corresponding to the SSB.

For example, the indication information may include an information element {SSB index, allowed PLMN set}. The allowed PLMN set includes at least one PLMN identity.

S602: The first access network device sends system information of the first cell. Correspondingly, a first terminal device receives the system information of the first cell.

The system information includes the indication information determined in step S601. For example, the system information may be a MIB or a SIB 1, that is, the first access network device broadcasts, in the MIB or the SIB 1 of the first cell, a PLMN corresponding to an SSB.

S603: The first terminal device determines, based on the indication information, the PLMN corresponding to the first SSB.

Optionally, after receiving the system information of the first cell, the first terminal device may read the indication information in the system information, and determine, based on an indication of the indication information, the PLMN corresponding to the first SSB. After determining the PLMN corresponding to the first SSB, the first terminal device may perform some processing.

For example, an SSB selected by the first terminal device in an initial access procedure is the first SSB, and a PLMN selected by the first terminal device is the first PLMN. After the first terminal device determines the PLMN corresponding to the first SSB, if the PLMN corresponding to the first SSB includes the first PLMN, the first terminal device may continue to perform initial access based on the first SSB, for example, perform random access based on the first SSB. If the PLMN corresponding to the first SSB does not include the first PLMN, it indicates that the first SSB does not support the terminal device that selects the first PLMN in performing initial access. In this case, the first terminal device may reselect another SSB (denoted as a fifth SSB) of the first cell, and perform initial access based on the fifth SSB.

Optionally, if the indication information further indicates a PLMN corresponding to an SSB other than the first SSB of the first cell, the first terminal device may select, based on the indication information, an SSB whose corresponding PLMN includes the first PLMN to complete initial access. In other words, the indication information further indicates a PLMN corresponding to the fifth SSB, and the PLMN corresponding to the fifth SSB includes the first PLMN.

For example, it is assumed that the indication information indicates that an SSB 1 corresponds to a PLMN 1, an SSB 2 corresponds to a PLMN 2, and the first NCR can forward the SSB 1 but cannot forward the SSB 2. In other words, the first NCR can provide a relay service for a terminal device that selects the PLMN 1 but cannot provide a relay service for a terminal device that selects the PLMN 2.

If the SSB selected by the first terminal device in the initial access procedure is the SSB 1, and the PLMN selected by the first terminal device is the PLMN 2, the first terminal device may learn, based on the indication information, that a PLMN corresponding to the SSB 1 is the PLMN 1 rather than the PLMN 2, that is, the SSB 1 supports access of only a terminal device that selects the PLMN 1, and does not support access of a terminal device (including the first terminal device) that selects the PLMN 2. In this case, the first terminal device may select another SSB of the first cell to complete access. For example, the first terminal device learns, based on the indication information, that a PLMN corresponding to the SSB 2 is the PLMN 2. Therefore, the first terminal device may select the SSB 2 to complete access.

Optionally, when the first terminal device learns, based on the indication information, that PLMNs corresponding to a plurality of SSBs each include the PLMN 2, the first terminal device may select an SSB with best signal quality from the plurality of SSBs to complete access.

Based on the foregoing solution, an access network device may broadcast, in system information, a PLMN corresponding to an SSB, so that a terminal device that receives the system information can learn of a correspondence between the SSB and the PLMN, and can perform related processing based on the correspondence.

For example, the terminal device may determine, based on the correspondence between the SSB and the PLMN and an SSB and a PLMN that are selected by the terminal device, to continue to complete initial access based on the SSB selected by the terminal device or to reselect an SSB. For example, if a PLMN corresponding to the SSB selected by the terminal device includes the PLMN selected by the terminal device, the terminal device continues to complete initial access based on the SSB selected by the terminal device; or if a PLMN corresponding to the SSB selected by the terminal device does not include the PLMN selected by the terminal device, the terminal device reselects an SSB.

Based on this, a specific PLMN is configured for an SSB that can be forwarded by an NCR, to allow a terminal device that selects the specific PLMN to access a network via the NCR, and reject access, via the NCR, of a terminal device that selects another PLMN to the network, so that the NCR serves the terminal device that selects the specific PLMN, to improve a control capability of an operator on the NCR.

Optionally, for a terminal device that accesses the first cell, the access network device may learn of an SSB and a PLMN that are selected by the terminal device. For example, because there is a correspondence between an SSB and a random access resource, the access network device may determine, based on a random access resource used by the terminal device to perform random access, an SSB selected by the terminal device. A PLMN selected by the terminal device may be reported by the terminal device to the access network device after random access is completed.

Optionally, the access network device may learn of an SSB that can be forwarded by an NCR. When the SSB that can be forwarded by the NCR includes the SSB selected by the terminal device, the access network device may determine that the terminal device performs access via the NCR. Then, the network device may check whether a PLMN corresponding to the SSB selected by the terminal device includes the PLMN reported by the terminal device (namely, the PLMN selected by the terminal device).

If the PLMN corresponding to the SSB selected by the terminal device does not include the PLMN reported by the terminal device, it indicates that the terminal device does not comply with the correspondence between the SSB and the PLMN broadcast by the access network device. In this case, the access network device may reject access of the terminal device via the NCR, for example, release an RRC connection or perform beam switching.

For example, it is assumed that an SSB 1 corresponds to a PLMN 1, an SSB 2 corresponds to a PLMN 2, and the NCR can forward the SSB 1 but cannot forward the SSB 2. If an SSB selected by the terminal device in an initial access procedure is the SSB 1, and a PLMN selected by the terminal device is the PLMN 2, but the terminal device still performs initial access based on the SSB 1, the access network device may find, through the foregoing check, that the terminal device does not comply with the correspondence between the SSB and the PLMN, that is, the terminal device that does not belong to a service scope of the NCR still accesses a network via the NCR. Therefore, the access network device may reject the access of the terminal device via the NCR. Consequently, the terminal device no longer enjoys a service of the NCR.

Based on this solution, a case in which a terminal device that does not belong to the service scope of the NCR accesses the network via the NCR can be avoided, to further improve a control capability of an operator on the NCR.

It should be noted that the method shown in FIG. 6 is not limited in this application to being applied to a communication scenario in which an NCR is deployed, and may also be applied to another communication scenario, for example, a communication scenario in which no relay system is included, or a communication scenario in which another relay device different from the NCR is deployed.

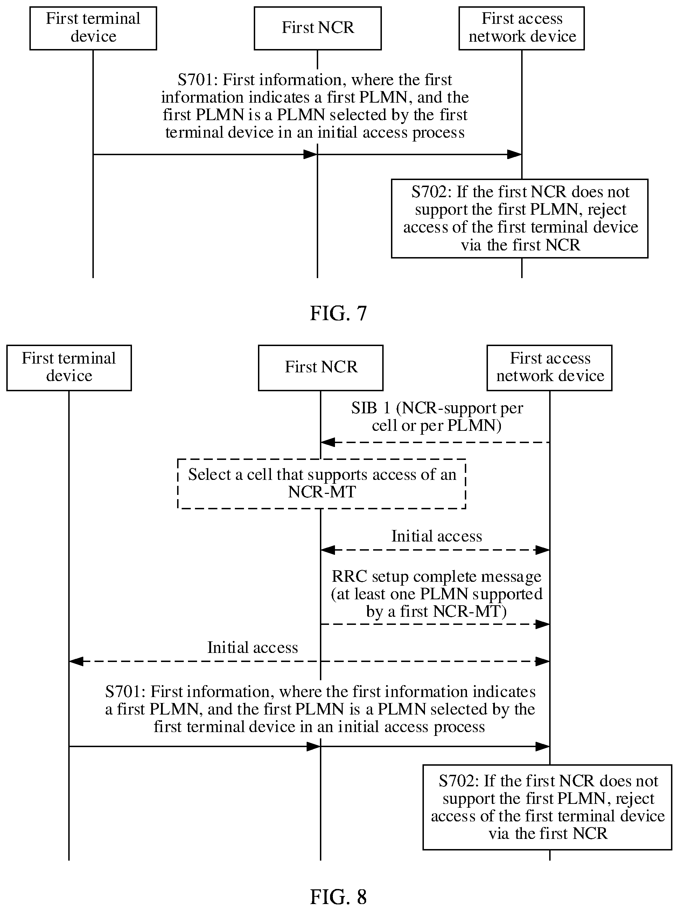

In addition to the method shown in FIG. 6, an embodiment of this application further provides another communication method. As shown in FIG. 7, the communication method includes the following steps.

S701: A first terminal device sends first information to a first access network device. Correspondingly, the first access network device receives the first information from the first terminal device.

Optionally, before step S701, the first terminal device has performed an initial access procedure and accessed the first access network device, for example, accessed a first cell of the first access network device.

Optionally, the first terminal device may access the first cell via a first NCR controlled by the first access network device. Therefore, the first information may alternatively be forwarded by the first NCR to the first access network device (where the first terminal device is unaware of the first information). In other words, that the first access network device receives the first information from the first terminal device includes: The first access network device receives the first information from the first terminal device via the first NCR.

The first information indicates a first PLMN, and the first PLMN is a PLMN selected by the first terminal device in the initial access procedure.

Optionally, the first information may be carried in an RRC setup complete message. In other words, the first terminal device sends the RRC setup complete message to the first access network device, where the RRC setup complete message carries the first information.

Optionally, after receiving the first information, the first access network device may determine whether the first NCR supports the first PLMN. If the first NCR supports the first PLMN, it indicates that the first terminal device is allowed to enjoy a relay service provided by the first NCR, and the first terminal device may perform normal access via the first NCR. If the first NCR does not support the first PLMN, it indicates that the first terminal device is not allowed to perform access via the first NCR. In this case, the following step S702 may be performed.

Optionally, for each terminal device that accesses the first access network device, the first access network device may determine, for example, based on an SSB selected by the terminal device, whether the terminal device accesses the first access network device via the first NCR. For details, refer to the foregoing related descriptions. For a terminal device that performs access via the first NCR, the first access network device performs step S702. To be specific, before step S702, the first access network device may determine that the first terminal device accesses the first access network device via the first NCR.

S702: If the first NCR does not support the first PLMN, the first access network device rejects the access of the first terminal device via the first NCR.

In other words, if the first NCR does not support the first PLMN, the first access network device rejects access of the first terminal device to the first cell or the first access network device via the first NCR.

Optionally, that the first NCR does not support the first PLMN may alternatively be understood as that the first NCR does not serve the first PLMN, or the first NCR does not serve a terminal device that selects the first PLMN, and the three descriptions may be replaced with each other.

In a first possible implementation, if a PLMN supported by the first NCR does not include the first PLMN, the first NCR does not support the first PLMN. In other words, if the PLMN supported by the first NCR does not include the first PLMN, the first access network device rejects the access of the first terminal device via the first NCR.

Optionally, the PLMN supported by the first NCR may be reported by the first NCR to the first access network device. For example, before step S702, the first NCR may send second information to the first access network device, and correspondingly, the first access network device receives the second information from the first NCR. The second information indicates at least one PLMN supported by the first NCR. For example, the second information includes an identity of the at least one PLMN supported by the first NCR.

For example, as shown in FIG. 8, an MT (denoted as an NCR-MT) of the first NCR may select a cell (where the first cell is used as an example) that supports access of the NCR-MT, and after completing an initial access procedure in the first cell, the NCR-MT sends an RRC setup complete message to the first access network device, where the RRC setup complete message carries the second information.

Optionally, the first NCR may support a plurality of PLMNs. For example, in a RAN sharing scenario in which three operators share the first cell, if the first NCR is jointly purchased by two operators, the first NCR may provide services for terminal devices of the two operators, that is, PLMNs supported by the first NCR are PLMNs corresponding to the two operators.

Optionally, the first NCR may further report, to the access network device, a PLMN selected by the MT in the initial access procedure. For example, the selected PLMN and the second information may be carried in a same message, for example, both are carried in the RRC setup complete message; or the selected PLMN and the second information may be carried in different messages. This is not specifically limited in this application.

Optionally, the PLMN selected by the MT of the first NCR in the initial access procedure may be carried in a selected PLMN identity (selectedPLMN-Identity) information element. The second information may be carried in a supported PLMN identity list (supportedPLMN-Identity-List) information element.

Based on this implementation, the second information is carried in the supportedPLMN-Identity-List, instead of extending the selectedPLMN-Identity information element to a selectedPLMN-Identity list information element, to carry the at least one PLMN supported by the first NCR. This can help the first access network device determine the PLMN selected by the MT of the first NCR, to select an AMF network element corresponding to the PLMN to perform registration on the MT of the first NCR. If the selectedPLMN-Identity list information element carries a plurality of PLMNs, the first access network device cannot select an AMF network element to perform registration on the MT of the first NCR, and consequently, access of the MT of the first NCR fails.

In a second possible implementation, if a PLMN selected by the first NCR (the NCR-MT) in the initial access procedure is different from the first PLMN, the first NCR does not support the first PLMN. In other words, if the PLMN selected by the first NCR (the NCR-MT) in the initial access procedure is different from the first PLMN, the first access network device rejects the access of the first terminal device via the first NCR.

Optionally, before step S702, the first NCR may report, to the access network device, a PLMN selected by the MT in the initial access procedure. For details, refer to the related descriptions of reporting the PLMN in the first possible implementation. Details are not described herein again.

In a third possible implementation, if the first PLMN does not support access of the NCR-MT, the first NCR does not support the first PLMN. In other words, if the first PLMN does not support the access of the NCR-MT, the first access network device rejects the access of the first terminal device via the first NCR.

Optionally, because the first terminal device accesses the first cell, and the PLMN selected by the first terminal device in the initial access procedure is the first PLMN, the first PLMN is a PLMN of the first cell, and whether the first PLMN supports the access of the NCR-MT may be configured by the first access network device. Therefore, the first access network device may learn whether the first PLMN supports the access of the NCR-MT, and may determine, depending on whether the first PLMN supports the access of the NCR-MT, whether the first NCR supports the first PLMN.

Optionally, as shown in FIG. 8, before step S701, the first access network device may send system information (for example, a SIB 1). The system information may indicate whether the first cell supports the access of the NCR-MT, that is, the first access network device configures an NCR-support information element at a granularity of a cell (per cell). In this case, all PLMNs supported by the first cell support the access of the NCR-MT, or none of the PLMNs supports the access of the NCR-MT.

Alternatively, the system information may indicate whether each PLMN supported by the first cell supports the access of the NCR-MT, that is, the first access network device configures an NCR-support information element at a granularity of a PLMN (per PLMN). In this case, some PLMNs supported by the first cell may support the access of the NCR-MT, and the other PLMNs may not support the access of the NCR-MT, or all PLMNs support the access of the NCR-MT, or none of the PLMNs supports the access of the NCR-MT.

Optionally, when the first access network device configures the NCR-support information element at a granularity of a cell, the first access network device may determine, by using the first or second possible implementation, whether the first NCR supports the first PLMN. When the first access network device configures the NCR-support information element at a granularity of a PLMN, the first access network device may determine, by using the first, second, or third possible implementation, whether the first NCR supports the first PLMN.

Based on this implementation, whether the first cell supports the access of the NCR-MT is configured at a granularity of a cell, so that signaling overheads can be reduced. In addition, based on the first or second possible implementation, when configuration is performed at a granularity of a cell, whether the first PLMN supports the access of the NCR-MT can also be determined. Whether each PLMN supports the access of the NCR-MT is configured at a granularity of a PLMN, so that configuration flexibility can be improved.

Based on the foregoing solution, for a terminal device that accesses a network via an NCR, an access network device may determine whether the NCR supports a PLMN selected by the terminal device. When the NCR does not support the PLMN selected by the terminal device, the access of the terminal device via the NCR is rejected. In other words, through control of the access network device, access, via the NCR, of a terminal device that selects a PLMN supported by the NCR can be allowed, to enjoy a relay service provided by the NCR; and access, via the NCR, of a terminal device that selects a PLMN that is not supported by the NCR to the network may be rejected. Therefore, the NCR serves a terminal device that selects a specific PLMN, to improve a control capability of an operator on the NCR.

Optionally, in step S702, the first access network device may reject the access of the first terminal device via the first NCR in the following three manners.

Manner 1: The first access network device performs beam switching (beam switching) on the first terminal device.

In other words, if the first NCR does not support the first PLMN, the first access network device performs beam switching on the first terminal device.

Optionally, after performing beam switching on the first terminal device, the first access network device may provide a service for the first terminal device by using a beam that cannot be forwarded by the first NCR (namely, a beam that cannot be received by the first NCR).

Manner 2: The first access network device sends an RRC message to the first terminal device. Correspondingly, the first terminal device receives the RRC message from the first access network device.

The RRC message is used to release an RRC connection between the first terminal device and the first access network device. For example, the RRC message may be an RRC release (RRCRelease) message.

In other words, if the first NCR does not support the first PLMN, the first access network device sends the RRC message to the first terminal device, where the RRC message is used to release the RRC connection between the first terminal device and the first access network device.

Optionally, the RRC message may include third information. In a possible implementation, the third information indicates a second SSB, the second SSB is used for a next time of access of the first terminal device, and an SSB that can be forwarded by the first NCR does not include the second SSB. In other words, the first access network device indicates the first terminal device to select the second SSB during the next time of access. A PLMN supported by the second SSB includes the first PLMN. In this scenario, for example, the third information may be carried in a redirect carrier information (redirectCarrierInfo) information element.

Based on this possible implementation, the first access network device indicates, to the first terminal device, an SSB that should be selected during a next time of access, and a case in which the first terminal device still selects an SSB that does not support the first PLMN to perform the next time of access can be avoided, to reduce an access delay of the first terminal device and improve access efficiency.

In another possible implementation, the third information indicates a third SSB, the third SSB is not used for a next time of access of the first terminal device, and the third SSB is an SSB that can be forwarded by the first NCR. After receiving the third information, the first terminal device may not measure the third SSB when performing measurement for the next time of access, and select an SSB based on a measurement result of another SSB for access. In this scenario, for example, the third information may be carried in a banned carrier information (bannedCarrierInfo) information element.

Based on this possible implementation, the first access network device indicates, to the first terminal device, an SSB that cannot be used for access of the first terminal device, so that a case in which the first terminal device selects, during a next time of access, an SSB that cannot be used for access of the first terminal device is avoided, to reduce an access delay of the first terminal device and improve access efficiency.

Manner 3: The first access network device performs cell handover on the first terminal device.

In other words, if the first NCR does not support the first PLMN, the first access network device performs cell handover on the first terminal device.

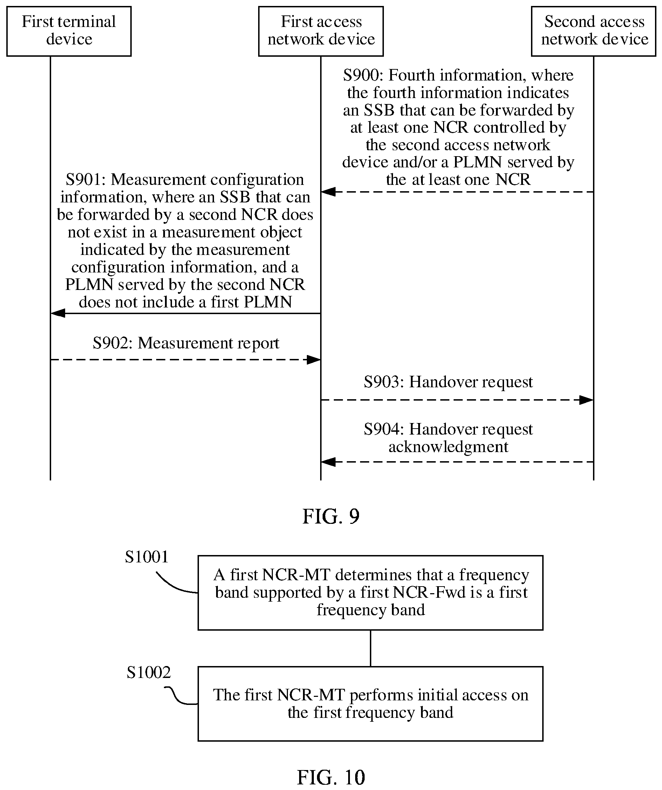

For example, as shown in FIG. 9, that the first access network device performs cell handover on the first terminal device may include the following steps.

S901: The first access network device sends measurement configuration information to the first terminal device. Correspondingly, the first terminal device receives the measurement configuration information from the first access network device.

An SSB that can be forwarded by a second NCR does not exist (or is excluded) in a measurement object indicated by the measurement configuration information, and a PLMN served (or supported) by the second NCR does not include the first PLMN.

For example, the SSB that can be forwarded by the second NCR includes a fourth SSB. The measurement configuration information may include a measurement prohibited information element, and a frequency corresponding to the fourth SSB and an identifier of the fourth SSB are carried in the measurement prohibited information element. Subsequently, when performing measurement on the frequency corresponding to the fourth SSB, the first terminal device may not measure the fourth SSB on the frequency.

Based on a configuration of the measurement object, the first terminal device does not measure the SSB that can be forwarded by the second NCR, and therefore does not select the SSB, that is, does not access a network via the second NCR, so that a case in which the first terminal device is rejected by the access network device after accessing the network via the second NCR is avoided, to improve cell handover efficiency.

Optionally, the second NCR includes an NCR (deployed in a cell other than the first cell) other than the first NCR controlled by the first access network device, and/or an NCR controlled by a second access network device. For example, the first access network device may be understood as a source access network device for cell handover, and the second access network device may be understood as a target access network device for cell handover.

It should be noted that step S901 may alternatively be independently performed without depending on the method shown in FIG. 7. For example, step S901 may be applied to any scenario in which the measurement object needs to be configured, for example, any cell handover scenario.

Optionally, if the second NCR includes the NCR controlled by the second access network device, in a possible implementation, an SSB that can be forwarded by at least one NCR controlled by the second access network device, and/or a PLMN served (or supported) by the at least one NCR controlled by the second access network device may be configured for the first access network device via an operation, administration and maintenance (operation, administration and maintenance, OAM) system.

If the second NCR includes the NCR controlled by the second access network device, in another possible implementation, as shown in FIG. 9, before step S901, the following step S900 may be further performed.

S900: The second access network device sends fourth information to the first access network device. Correspondingly, the first access network device receives the fourth information from the second access network device.

The fourth information indicates the SSB that can be forwarded by the at least one NCR controlled by the second access network device, and/or the PLMN served (or supported) by the at least one NCR controlled by the second access network device.

Optionally, the fourth information may be an XN interface setup request (XN SETUP REQUEST) message or an XN interface setup response (XN SETUP RESPONSE) message.

Optionally, the first access network device may alternatively send information to the second access network device, to indicate an SSB that can be forwarded by at least one NCR controlled by the first access network device and/or a PLMN served (or supported) by the at least one NCR.

It should be noted that step S900 may alternatively be independently performed without depending on the methods shown in FIG. 7 and FIG. 9. In other words, information (for example, SSBs that can be forwarded by NCRs and/or PLMNs served by the NCRs) about the NCRs (or the NCRs in cells) controlled by access network devices may be exchanged between the access network devices as basic information of the cells. A scenario in which the access network devices exchange the information is not limited in this application.

Optionally, step S900 is an optional step, and may not be performed. In step S901, the first access network device may configure the measurement object for the first access network device according to the current conventional technology.

Optionally, after step S901, a cell handover procedure of the first terminal device may further include the following step S902 to step S904.

S902: The first terminal device sends a measurement report to the first access network device. Correspondingly, the first access network device receives the measurement report from the first terminal device.

Optionally, the measurement report may include PCI information measured by the first terminal device, an identifier of a measured SSB, and a measured signal strength of the SSB. The signal strength may be represented, for example, by using a reference signal received power (reference signal received power, RSRP) or reference signal received quality (reference signal received quality, RSRQ).

S903: The first access network device sends a handover request (Handover Request) message to the second access network device. Correspondingly, the second access network device receives the handover request message from the first access network device.

Optionally, the handover request message includes an identifier of a target cell, an identifier of an SSB that is of the target cell and that is measured by the first terminal device and a signal strength of the SSB measured by the first terminal device, and a PLMN selected by the first terminal device when the first terminal device accesses the first network device.

S904: The second access network device sends a handover request acknowledgment (Handover Request ACK) message to the first access network device. Correspondingly, the first access network device receives the handover request acknowledgment information from the second access network device.

Optionally, the handover request acknowledgment message may include a random access resource allocated by the second access network device to the first terminal device based on the identifier of the SSB that is of the target cell and that is measured by the first terminal device and the signal strength that is of the SSB and that is measured by the first terminal device.

For example, when step S900 is performed, and the measurement object indicated by the measurement configuration information in step S901 does not include the SSB that can be forwarded by the second NCR, the second access network device may allocate, to the first terminal device, a random access resource corresponding to an SSB with a highest signal strength measured by the first terminal device.

When step S900 is not performed, and the first access network device configures the measurement object for the first access network device in step S901 according to the current conventional technology, the second access network device may first exclude, from the SSB that is of the target cell and that is measured by the first terminal device, an SSB that can be forwarded by the second NCR, and then allocate, to the first terminal device from a remaining SSB, a random access resource corresponding to an SSB with a highest signal strength.

Optionally, after step S904, the first access network device may send, to the first terminal device, the random access resource allocated by the second access network device to the first terminal device. The first terminal device may initiate random access to the target cell on the random access resource, to access the target cell.

Based on Manner 3, signal quality of the first terminal device can be improved. This is because before step S701, the first terminal device has accessed the first access network device via the first NCR, and it indicates that the first terminal device may be located at a cell edge of the first cell. If the first terminal device cannot access the first cell via the first NCR, signal quality is very poor after the first terminal device does not access the first cell via the first NCR. Therefore, cell handover is performed on the first terminal device, so that the first terminal device can access a target cell with good signal quality, to improve the signal quality of the first terminal device.

In addition, in cell handover, based on a configuration of the measurement object in step S901, the first terminal device does not measure the SSB that can be forwarded by the second NCR, and therefore does not select the SSB, that is, does not access a network via the second NCR, so that a case in which the first terminal device is rejected by the access network device after accessing the network via the second NCR is avoided, to improve cell handover efficiency.

The foregoing describes initial access of a terminal device in an NCR scenario. The following describes an initial access procedure of an NCR-MT.

FIG. 10 shows another communication method according to this application. In the communication method, a related design is performed for initial access of an NCR-MT. Refer to FIG. 10. The method includes the following steps.

S1001: A first NCR-MT determines that a frequency band supported by a first NCR-Fwd is a first frequency band.

The first NCR-MT is an MT of a first NCR, and the first NCR-Fwd is Fwd of the first NCR. The first NCR may be an NCR controlled by a first access network device.

Optionally, the frequency band supported by the first NCR-Fwd may alternatively be understood as an operating frequency band of the first NCR-Fwd, or that the first NCR-Fwd can receive and send a signal on the first frequency band.

S1002: The first NCR-MT performs initial access on the first frequency band.

Optionally, that the first NCR-MT performs initial access on the first frequency band may include: The first NCR-MT searches for a frequency on the first frequency band, or measures an SSB on the first frequency band.

Optionally, after measuring the SSB on the first frequency band, the first NCR-MT may select an SSB on the first frequency band to perform a subsequent access procedure, for example, obtain a PCI and a MIB, obtain a SIB 1, select a PLMN, and initiate random access. Refer to the related descriptions of the initial access procedure of the IAB-MT. Details are not described herein again.

Optionally, after the first NCR-MT completes initial access, the method may further include: The first NCR-MT measures the SSB on the first frequency band. For example, the measurement may be used for cell reselection or cell handover. When the measurement is used for cell handover, the first NCR-MT may further send a measurement report to the first access network device. The measurement report may indicate an identifier of the SSB measured by the first NCR-MT on the first frequency band and a signal strength that is of the SSB and that is measured by the first NCR-MT.

Based on this solution, when performing initial access, cell reselection, or cell handover, an NCR-MT considers a capability of an NCR-Fwd, and performs initial access or measurement on a frequency band supported by the NCR-Fwd, so that the NCR-Fwd can also operate normally after the NCR-MT subsequently accesses a network, to avoid a case in which a cell accessed by the NCR-MT is on a frequency band that is not supported by the NCR-Fwd, and ensure normal operation of an NCR.

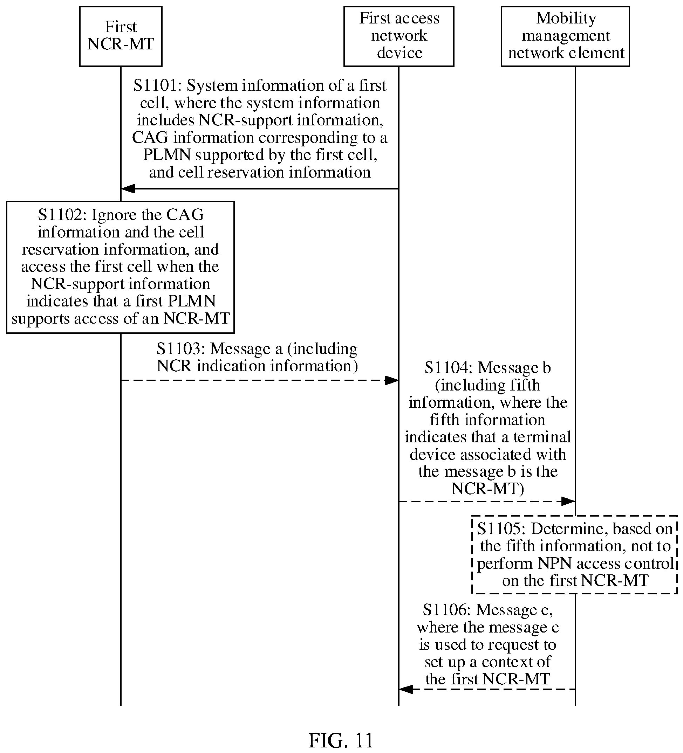

In addition to the method shown in FIG. 10, this application further provides a communication method to design initial access of an NCR-MT in an NPN scenario. Refer to FIG. 11. The method includes the following steps.

S1101: A first access network device sends system information of a first cell. Correspondingly, a first NCR-MT receives the system information of the first cell.

The system information includes NCR-support information, CAG information corresponding to at least one PLMN supported by the first cell, and cell reservation information.

Optionally, the NCR-support information indicates whether each PLMN supported by the first cell supports access of the NCR-MT, or indicates whether the first cell supports the access of the NCR-MT. For example, the NCR-support information may be information in an NCR-support information element.

Optionally, the CAG information corresponding to the at least one PLMN supported by the first cell may be a CAG identifier or the like. The system information may include CAG information corresponding to each PLMN supported by the first cell.

Optionally, the cell reservation information indicates whether the first cell is a reserved cell. For example, the cell reservation information may be carried in a cellReservedForOtherUse information element. If the first cell is a CAG-only cell, the information element may be set to true, indicating that the cell reservation information indicates that the first cell is the reserved cell. If the first cell is a CAG cell but not the CAG-only cell, the information element may be set to false, indicating that the cell reservation information indicates that the first cell is not the reserved cell.

Optionally, the system information may be a SIB 1.

S1102: The first NCR-MT ignores the CAG information and the cell reservation information, and accesses the first cell when the NCR-support information indicates that a first PLMN supports the access of the NCR-MT.

The first PLMN is a PLMN selected by the first NCR-MT in an initial access procedure.

Optionally, that the first NCR-MT ignores the CAG information and the cell reservation information may include: The first NCR-MT ignores (or does not parse) an information element (for example, a CAG information element) that carries the CAG information and an information element (for example, cellReservedForOtherUse) that carries the cell reservation information.

Optionally, after the first NCR-MT accesses the first cell, the communication method may further include the following steps.

S1103: The first NCR-MT sends a message a to the first access network device. Correspondingly, the first access network device receives the message a from the first NCR-MT.

The message a includes NCR indication information, and the NCR indication information indicates that a sender of the message a is an NCR or the NCR-MT. For example, the message a may be an RRC setup complete message.

S1104: The first access network device sends a message b to a mobility management network element (where an AMF network element is used as an example). Correspondingly, the AMF network element receives the message b from the first access network device.

The message b includes fifth information, and the fifth information indicates that a terminal device associated with the message b is the NCR-MT.

Optionally, the message b may be an initial UE message (INITIAL UE MESSAGE). In addition, the message b may also be referred to as a fourth message.

S1105: The AMF network element determines, based on the fifth information, not to perform NPN access control on the terminal device. In other words, the AMF network element does not perform NPN access control on the first NCR-MT.

Optionally, that the AMF network element does not perform NPN access control on the first NCR-MT may include: The AMF network element does not check an allowed CAG list of the first NCR-MT.

S1106: The AMF network element sends a message c to the first access network device. Correspondingly, the first access network device receives the message c from the AMF network element.

The message c is used to request to set up a context of the first NCR-MT on a first access network device side. For example, the message c may be an initial context setup request (INITIAL CONTEXT SETUP REQUEST) message.

Based on this solution, because an NCR-MT ignores CAG information and cell reservation information, a non-NPN NCR (namely, an NCR that does not meet an NPN constraint condition) is allowed to access a CAG-only cell to improve coverage of the non-NPN NCR, to reduce production costs and complexity of the NCR, and facilitate large-scale deployment of the NCR.

In addition, because an NCR-Fwd transparently amplifies and forwards only a physical signal, ignoring the NPN constraint condition by the NCR-MT does not affect a common terminal device. Even if the non-NPN NCR accesses the CAG-only cell, the common terminal device in the CAG-only cell still determines the NPN constraint condition, and an AMF network element side still performs NPN access control on the common terminal device. This does not cause non-NPN UE to access the CAG-only cell, and does not cause extra energy consumption to the common terminal device.

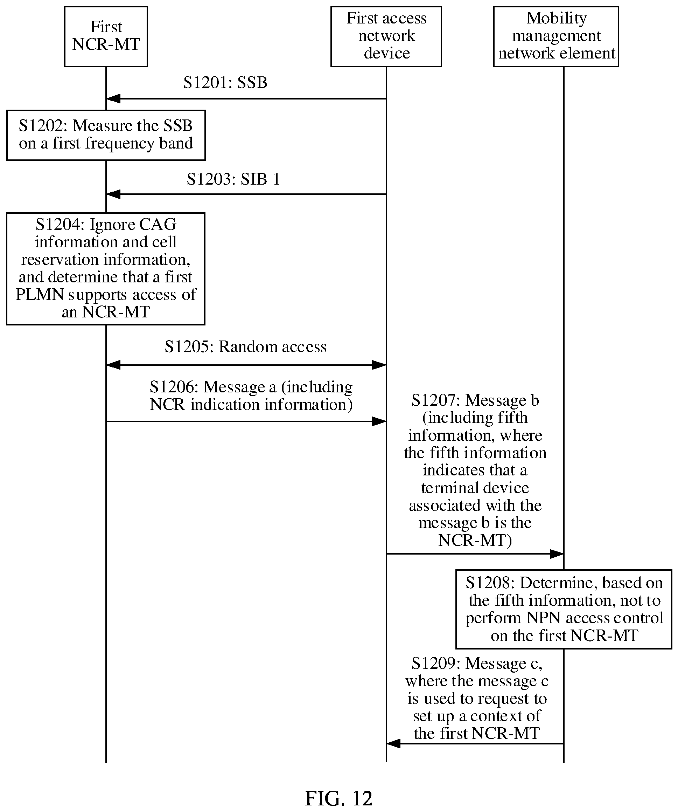

It should be noted that the communication methods shown in FIG. 10 and FIG. 11 may be separately performed, or may be performed in combination. When the communication methods are performed in combination, for example, as shown in FIG. 12, an initial access procedure of a first NCR-MT may include the following steps.

S1201: A first access network device sends an SSB.

S1202: The first NCR-MT measures the SSB on a first frequency band.

The first frequency band is a frequency band supported by a first NCR-Fwd. In this embodiment, an example in which the SSB sent by the first access network device is on the first frequency band is used for description.

After measuring the SSB on the first frequency band, the first NCR-MT may select an SSB on the first frequency band, obtain a PCI and a MIB based on the SSB, learn of a time-frequency position of a SIB 1, and perform the following step S1203.

S1203: The first access network device sends the SIB 1. Correspondingly, the first NCR-MT receives the SIB 1.

The SIB 1 may be an implementation of the system information of the first cell in step S1101. To be specific, the SIB 1 includes the NCR-support information, the CAG information corresponding to the at least one PLMN supported by the first cell, and the cell reservation information that are included in the system information. For details, refer to the related descriptions in step S1101. Details are not described herein again.

S1204: The first NCR-MT ignores the CAG information and the cell reservation information, and determines that a first PLMN supports access of an NCR-MT.

S1205: The first NCR-MT and the first access network device perform random access.

S1206 to S1209 are the same as step S1103 to step S1106. For details, refer to the related descriptions in step S1103 to step S1106. Details are not described herein again.

Optionally, after step S1209, the first NCR-MT may measure the SSB on the first frequency band, and the measurement may be used for cell reselection or cell handover.

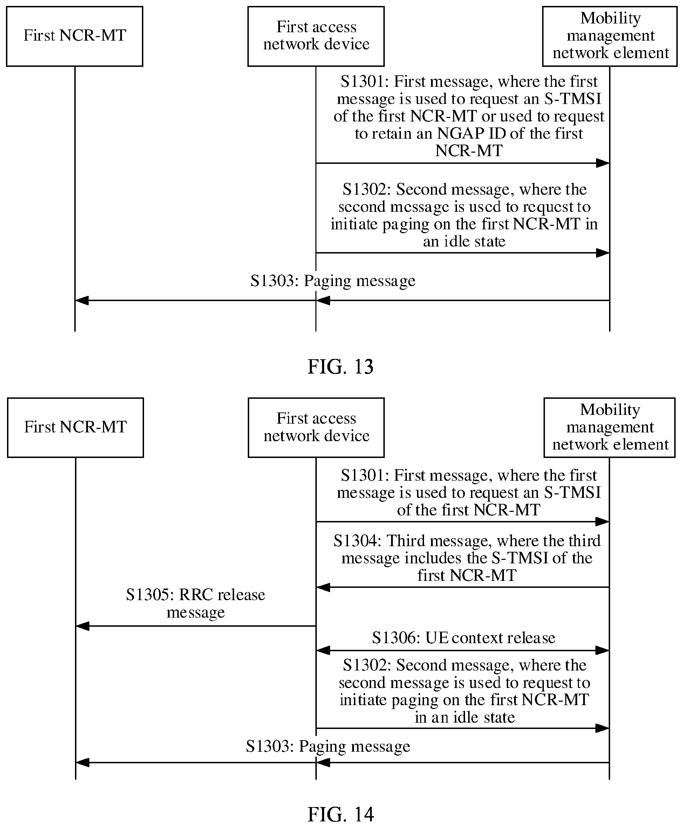

In addition to the foregoing method, this application further provides a communication method, to implement that an access network device actively triggers wake-up of an NCR-MT in an idle state. As shown in FIG. 13, the communication method includes the following steps.

S1301: A first access network device sends a first message to a mobility management network element. Correspondingly, the mobility management network element receives the first message from the first access network device.

In a first possible implementation, the first message is used to request a system temporary mobile subscriber identity (S-temporary mobile subscriber identity, S-TMSI) of a first NCR-MT. For example, in a 5G system, the S-TMSI may be a 5G-S-TMSI. The first message may also be referred to as a current S-TMSI request (current S-TMSI request) message.

It may be understood that, because an access network device is unaware of an S-TMSI of a terminal device, the first access network device needs to request the S-TMSI of the first NCR-MT from the mobility management network element.

In a second possible implementation, the first message is used to request the mobility management network element to retain an NGAP ID of the first NCR-MT.

For example, the first message may be used to request the mobility management network element to retain the NGAP ID of the first NCR-MT when the mobility management network element releases a context of the first NCR-MT. The first message may also be referred to as a retain NCR-MT's NGAP ID request (retain NCR-MT's NGAP ID request) message.

S1302: The first access network device sends a second message to the mobility management network element. Correspondingly, the mobility management network element receives the second message from the first access network device.

The first access network device may perform step S1302 when the first access network device needs to send control information to the first NCR-MT in an idle state. The second message is used to request to initiate paging on the first NCR-MT in the idle state.

In a first possible implementation, when the first message is used to request the S-TMSI of the first NCR-MT, the second message includes the S-TMSI of the first NCR-MT.

In a second possible implementation, when the first message is used to request the mobility management network element to retain the NGAP ID of the first NCR-MT, the second message includes the NGAP ID of the first NCR-MT, for example, a RAN UE NGAP ID and/or an AMF UE NGAP ID.

S1303: The mobility management network element sends a paging message of the first NCR-MT.

The paging message includes the S-TMSI of the first NCR-MT. The paging message is used to wake up the first NCR-MT, so that the first NCR-MT enters a connected state.

The following further describes the method shown in FIG. 13. When the first message is used to request the S-TMSI of the first NCR-MT,
optionally, the first message may include a radio access network side NGAP ID (for example, the RAN UE NGAP ID) of the first NCR-MT and/or a mobility management network element side NGAP ID (for example, the AMF UE NGAP ID) of the first NCR-MT, where the NGAP ID is used to notify the mobility management network element of an S-TMSI that is of a terminal device and that is requested by the first access network device.

Optionally, as shown in FIG. 14, after step S1301, the communication method may further include the following step S1304 to step S1306.

S1304: The mobility management network element sends a third message to the first access network device. Correspondingly, the first access network device receives the third message from the mobility management network element.

The third message includes the S-TMSI of the first NCR-MT. For example, the third message includes a mapping relationship between the S-TMSI and the NGAP ID (the RAN UE NGAP ID and/or the AMF UE NGAP ID).

After receiving the third message, the first access network device stores the S-TMSI of the first NCR-MT. For example, the first access network device stores a mapping relationship between a RAN side identifier of the first NCR-MT and the S-TMSI of the first NCR-MT. The RAN side identifier of the first NCR-MT may be, for example, a cell-radio network temporary identifier (cell-radio network temporary identifier, C-RNTI).

S1305: The first access network device sends an RRC release message to the first NCR-MT. Correspondingly, the first NCR-MT receives the RRC release message from the first access network device.

The RRC release message is used to release the first NCR-MT to an RRC idle state. In addition, the first access network device releases a context of the first NCR-MT on a RAC side.

S1306: The first access network device and the mobility management network element execute a UE context release procedure. The context of the first NCR-MT is released on a core network side.

For example, the first access network device sends a UE context release request (UE Context release request) message to the mobility management network element. After receiving the UE context release request, the mobility management network element sends a UE context release response (UE Context release response) message to the first access network device.

After step S1306, the first NCR-MT is in the RRC idle state. Subsequently, when the first access network device needs to send the control information to the first NCR-MT in the idle state, the first access network device may perform step S1302 and send the second message to the mobility management network element.

Optionally, the first access network device stores the mapping relationship between the C-RNTI of the first NCR-MT and the S-TMSI of the first NCR-MT. Therefore, when the first access network device needs to send again control information to an NCR-MT that is in an idle state and that is identified by a C-RNTI, the first access network device may send the second message to the mobility management network element, where the second message carries an S-TMSI corresponding to the C-RNTI.

Optionally, because an NG interface context of the first NCR-MT has been released, the second message does not carry the NGAP ID of the first NCR-MT. The second message is used by the first access network device to request the mobility management network element to initiate paging on the first NCR-MT, but the second message is not associated with UE (an NCR-MT).

When the first message is used to request the mobility management network element to retain the NGAP ID of the first NCR-MT,
optionally, the first message may include a radio access network side NGAP ID (for example, the RAN UE NGAP ID) of the first NCR-MT and/or a mobility management network element side NGAP ID (for example, the AMF UE NGAP ID) of the first NCR-MT, where the NGAP ID is used to notify the mobility management network element of an NGAP ID that is of a terminal device and that the first access network device requests the mobility management network element to retain.

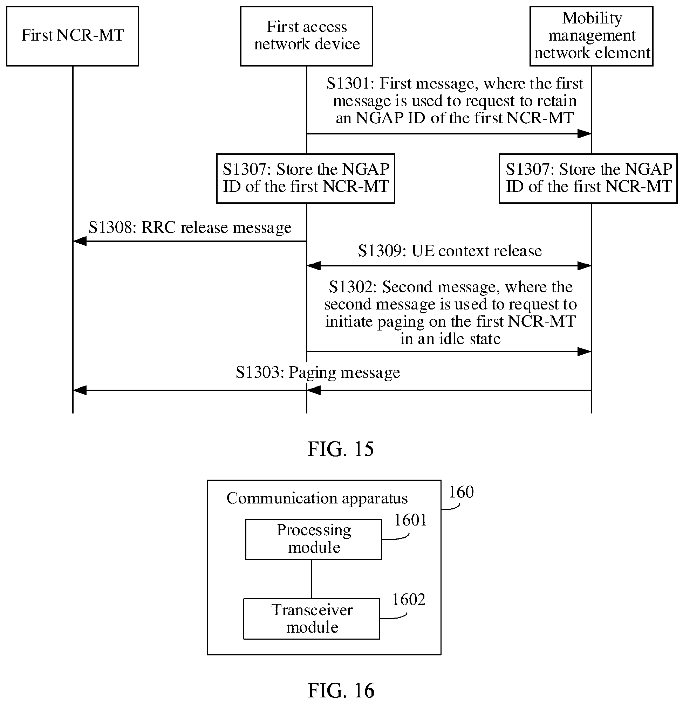

Optionally, as shown in FIG. 15, after step S1301, the communication method may further include the following step S1307 to step S1309.

S1307: The first access network device and the mobility management network element each store the NGAP ID of the first NCR-MT.

For example, the first access network device stores the mapping relationship between the RAN side identifier (for example, the C-RNTI) of the first NCR-MT and the NGAP ID. The mobility management network element stores the mapping relationship between the S-TMSI of the first NCR-MT and the NGAP ID. The NGAP ID includes the RAN UE NGAP ID and/or the AMF UE NGAP ID.

S1308 and S1309 are the same as step S1305 and step S1306. For details, refer to the related descriptions in step S1305 and step S1306. Details are not described herein again.

It may be understood that, although the context of the first NCR-MT is released, the information stored in step S1307 is still retained.

After step S1309, the first NCR-MT is in the RRC idle state. Subsequently, when the first access network device needs to send the control information to the first NCR-MT in the idle state, the first access network device may perform step S1302 and send the second message to the mobility management network element.

Optionally, the first access network device stores the mapping relationship between the C-RNTI of the first NCR-MT and the NGAP ID of the first NCR-MT. Therefore, when the first access network device needs to send again control information to an NCR-MT that is in an idle state and that is identified by a C-RNTI, the first access network device may send the second message to the mobility management network element, where the second message carries a RAN UE NGAP ID and/or an AMF UE NGAP ID corresponding to the C-RNTI.

After receiving the second message, the mobility management network element may identify, based on the information stored in S1307, a terminal device (namely, the first NCR-MT) to which the paging message needs to be sent, to perform step S1303.

Based on this solution, when an access network device releases an NCR-MT to an RRC idle state, because the access network device requests an S-TMSI of the NCR-MT from the mobility management network element or requests the mobility management network element to store an NGAP ID of the NCR-MT, when the access network device needs to send control information to the NCR-MT again, the access network device may identify the NCR-MT by using the S-TMSI or the NGAP ID, so that the mobility management network element can send a paging message to the NCR-MT, and wake up the NCR-MT, to enable the NCR-MT to enter an RRC connected state.

In other words, based on the foregoing solution, after releasing the NCR-MT to the RRC idle state, the access network device can wake up the NCR-MT again. NCR energy saving is implemented without affecting control of the access network device on an NCR. This facilitates normal operation of the NCR.

In addition, an operation, administration and maintenance (operation, administration and maintenance, OAM) server of the NCR may indicate to turn off the NCR. For example, due to reasons such as NCR maintenance, the OAM server may perform remote control to turn off the NCR. In this case, an NCR-Fwd is turned off. However, how to handle an NCR-MT in this scenario is not specified yet.

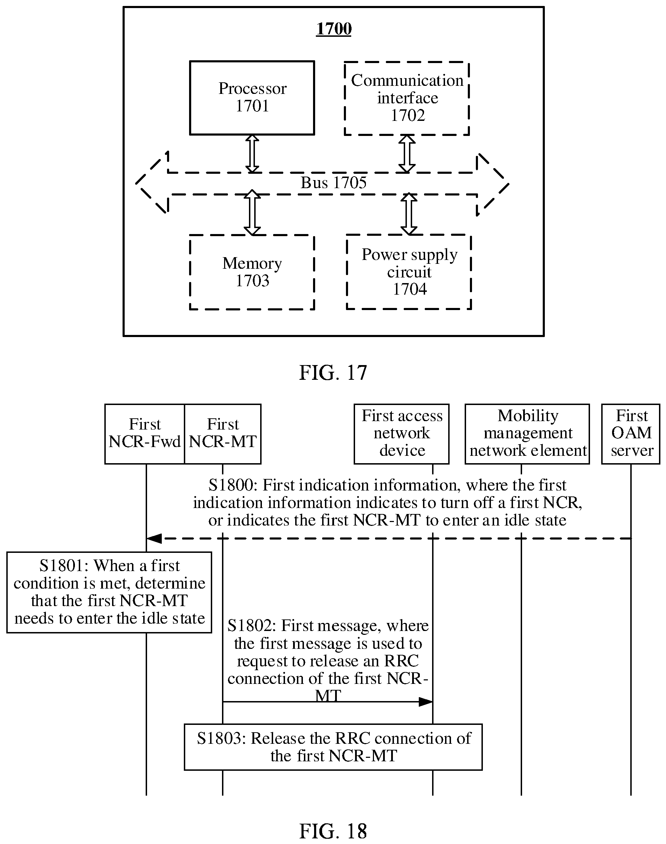

Based on this, this application further provides a communication method. When an NCR-Fwd is turned off, an NCR-MT can enter an idle state. As shown in FIG. 18, the communication method includes the following steps.

S1801: When a first condition is met, a first NCR-Fwd determines that a first NCR-MT needs to enter (or is to enter) an idle state.

The idle state may be an RRC idle state, and the idle state and the RRC idle state may be replaced with each other. In addition, for example, the first condition may have the following two possible cases.

Case 1: The first condition may include: The first NCR-Fwd receives first indication information from a first OAM server.

The first indication information indicates to turn off a first NCR, or the first indication information indicates the first NCR-MT to enter the idle state. The first OAM server is an OAM server of the first NCR.

In other words, before step S1801, the communication method may further include the following step S1800.

S1800: The first OAM server sends the first indication information to the first NCR-Fwd. Correspondingly, the first NCR-Fwd receives the first indication information from the first OAM server.

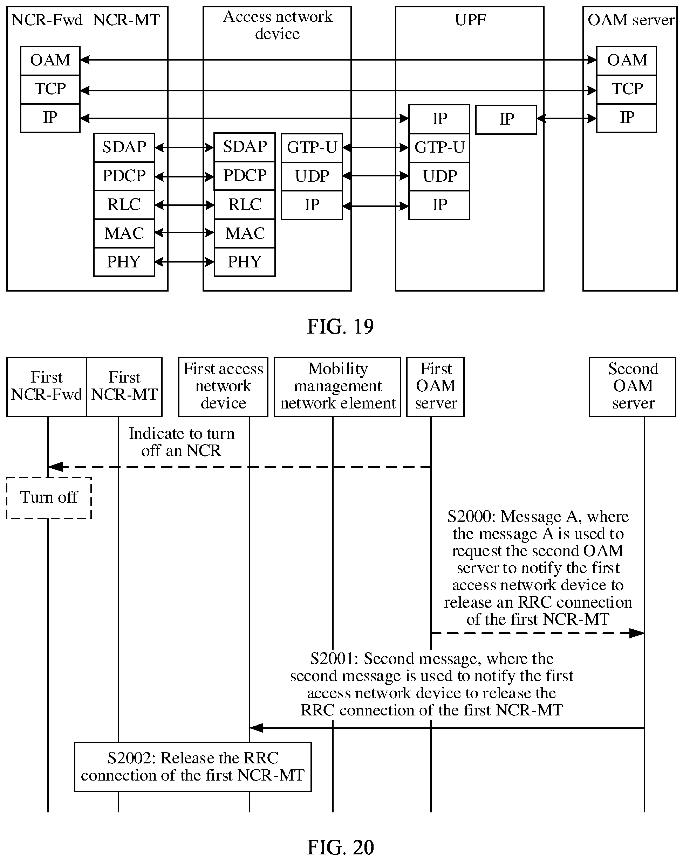

Optionally, data plane protocol stacks of an OAM server and an NCR may be shown in FIG. 19. Refer to FIG. 19. A peer data plane protocol stack between an NCR-Fwd and the OAM server includes at least one of an OAM layer, a transmission control protocol (transmission control protocol, TCP) layer, and an IP layer. A peer data plane protocol stack between an NCR-MT and an access network device (for example, a gNB) includes at least one of an SDAP layer, a PDCP layer, an RLC layer, a MAC layer, and a PHY layer. A peer data plane protocol stack between a user plane function (user plane function, UPF) network element and the OAM server includes an IP layer. A peer data plane protocol stack between the UPF network element and the access network device includes at least one of a general packet radio service tunneling protocol for the user plane (general packet radio service tunneling protocol for the user plane, GTP-U) layer, a user datagram protocol (user datagram protocol, UDP) layer, and an IP layer.

Optionally, based on the protocol stacks shown in FIG. 19, information sent by the first OAM server may be transferred by using a PDU session of the first NCR-MT, but the information is parsed on the first NCR-Fwd. Therefore, the first NCR-Fwd may learn of content of the first indication information, to determine (or decide), based on the first indication information, whether the first NCR-MT needs to enter the idle state.

In a possible implementation, the first indication information may indicate to turn off the first NCR. In this case, the first NCR-Fwd may determine that the first NCR-MT needs to enter the idle state. In other words, the first NCR-Fwd may obtain (or deduce or determine), based on that an NCR is turned off, that the first NCR-MT needs to enter the idle state.

Optionally, that the first indication information indicates to turn off the first NCR may alternatively be understood as that the first indication information indicates the first NCR to disable (or stop) a service. The two descriptions may be replaced with each other. This is not specifically limited in this application.

Optionally, after receiving the first indication information, the first NCR-Fwd may be further turned off based on an indication of the first indication information, for example, is powered off (powered off). This is not specifically limited in this application.

In another possible implementation, the first indication information may indicate the first NCR-MT to enter the idle state. In other words, the first OAM server may alternatively control the first NCR-MT, and explicitly indicate the first NCR-MT to enter the idle state.

Optionally, after receiving the first indication information, the first NCR-Fwd may parse the first indication information to learn that the first OAM server indicates the first NCR-MT to enter the idle state, and determine that the first NCR-MT needs to enter the idle state.

Case 2: The first condition may include: OFF time of the first NCR arrives.

Optionally, that the OFF time of the first NCR arrives may alternatively be understood as that time at which the first NCR is not allowed to provide a service (or to operate) arrives, service time of the first NCR ends, operation time of the first NCR ends, or the like. The descriptions may be replaced with each other.

Optionally, before step S1801, the first OAM server may preconfigure time at which the first NCR is allowed or is not allowed to provide a service. For example, the first NCR may be configured to be turned on within a specific time period and turned off within a remaining time period; or the first NCR may be configured to be turned on and turned off periodically and alternately, for example, turned on within a period of time, turned off within a following period of time, then turned on, turned off after being turned on for a period of time, and so on.

Optionally, based on the preconfiguration of the first OAM server, the first NCR-Fwd may determine ON time and OFF time of the first NCR-Fwd. When the OFF time arrives, the first NCR-Fwd may determine that the first NCR-MT needs to enter the idle state. In addition, the first NCR-Fwd is turned off.

After determining that the first NCR-MT needs to enter the idle state, the first NCR-MT may perform the following step S1802.

S1802: The first NCR-MT sends a first message to a first access network device. Correspondingly, the first access network device receives the first message from the first NCR-MT.

The first message is used to request to release an RRC connection of the first NCR-MT, or the first message is used to request to release the first NCR-MT to the idle state.

Optionally, after determining that the first NCR-MT needs to enter the idle state, the first NCR-Fwd may notify the first NCR-MT that the first NCR-MT needs to enter the idle state. The first NCR-MT may send the first message to the first access network device based on a notification of the first NCR-Fwd.

S1803: Perform an RRC connection release procedure of the first NCR-MT.

Optionally, after receiving the first message, the first access network device may trigger the RRC connection release procedure of the first NCR-MT. After the RRC connection release procedure of the first NCR-MT is completed, the first NCR-MT enters the idle state. For an implementation of step S1803, refer to related descriptions in the following step S2002. Details are not described herein again.

Based on this solution, an NCR-Fwd may determine whether an NCR-MT needs to enter an idle state. When the NCR-MT needs to enter the idle state, the NCR-MT requests an access network device to release an RRC connection of the NCR-MT and enters the idle state. This complies with a currently stipulated principle that only the access network device can control the NCR-MT to enter the idle state, and has high compatibility. In addition, when an NCR is indicated to be turned off, the NCR-Fwd determines that the NCR-MT needs to enter the idle state. Because the NCR-MT may not need to control the NCR-Fwd after the NCR-Fwd is turned off, the NCR-MT enters the idle state in this scenario, to implement NCR energy saving.

In addition to the method shown in FIG. 18, this application further provides another communication method. When an NCR-Fwd is turned off, an NCR-MT can enter an idle state. As shown in FIG. 20, the communication method includes the following steps.

S2001: A second OAM server sends a second message to a first access network device. Correspondingly, the first access network device receives the second message from the second OAM server.

The second message is used to notify (or request) the first access network device to release an RRC connection of a first NCR-MT, or the second message is used to notify (or request) the first access network device to release the first NCR-MT to an idle state. The second OAM server is an OAM server of the first access network device.

Optionally, the OAM server of the first access network device and an OAM server of a first NCR may be a same OAM server, that is, the second OAM server is the same as a first OAM server. In this case, when controlling the first NCR to be turned off, the second OAM server may send the second message to the first access network device.

Alternatively, the OAM server of the first access network device and the OAM server of the first NCR may be different OAM servers, that is, the second OAM server is different from the first OAM server. In this case, before step S2001, the method may further include the following step S2000.

S2000: The first OAM server sends a message A to the second OAM server. Correspondingly, the second OAM server receives the message A from the first OAM server.

The message A is used to request the second OAM server to notify the first access network device to release the RRC connection of the first NCR-MT, or the message A is used to request the second OAM server to notify the first access network device to release the first NCR-MT to the idle state.

Optionally, the message A includes an identifier of the first NCR. For example, the identifier of the first NCR may be a permanent identifier of the first NCR maintained by the first OAM server.

Optionally, after receiving the message A, the second OAM server may perform step S2001 and send the second message to the first access network device. The second message may carry the identifier of the first NCR.

Optionally, the first OAM server may send the message A to the second OAM server when the first NCR is indicated to be turned off or when preconfigured OFF time of the first NCR arrives. In addition, a first NCR-Fwd may be turned off when receiving an OFF indication of the first OAM server or the OFF time of the first NCR arrives. For details, refer to the related descriptions in the method shown in FIG. 18. Details are not described herein again.

S2002: Perform an RRC connection release procedure of the first NCR-MT.

Optionally, after receiving the second message, the first access network device may trigger the RRC connection release procedure of the first NCR-MT. After the RRC connection release procedure of the first NCR-MT is completed, the first NCR-MT enters the idle state.

For example, step S2002 may include: The first access network device sends a third message to the first NCR. Correspondingly, the first NCR receives the third message from the first access network device. The third message is used to release the RRC connection of the first NCR-MT, or the third message is used to release the first NCR-MT to the idle state. For example, the third message may be an RRC release (RRC Release) message.

In addition, in step S2002, the first access network device may further interact with a mobility management network element, to release a context of the first NCR-MT.

Based on this solution, an access network device may release an NCR-MT to an idle state based on a notification or a request of an OAM server. This complies with a currently stipulated principle that only the access network device can control the NCR-MT to enter the idle state, and has high compatibility. In addition, when determining that an NCR-Fwd is turned off, the OAM server may notify or request to release the NCR-MT to the idle state. Because the NCR-MT may not need to control the NCR-Fwd after the NCR-Fwd is turned off, the NCR-MT is released to the idle state in this scenario, to implement NCR energy saving.

After the first NCR-MT is released to the idle state, there may be a requirement for waking up the first NCR-MT again to enable the first NCR-MT to enter a connected state (namely, an RRC connected state). Based on this, this application further provides the following two implementations, to wake up an NCR-MT in an idle state.

Manner 1: The first OAM server initiates paging (paging) on the first NCR-MT.

Optionally, the first OAM server may initiate paging on the first NCR-MT when the first NCR needs to be turned on again.

After receiving a paging message, the first NCR-MT may initiate random access to enter a connected state.

Optionally, the turned-off first NCR-Fwd may be turned on after the first NCR-MT receives the paging message. Alternatively, the first OAM server may send information to the first NCR to indicate that the turned-off first NCR-Fwd is turned on again.

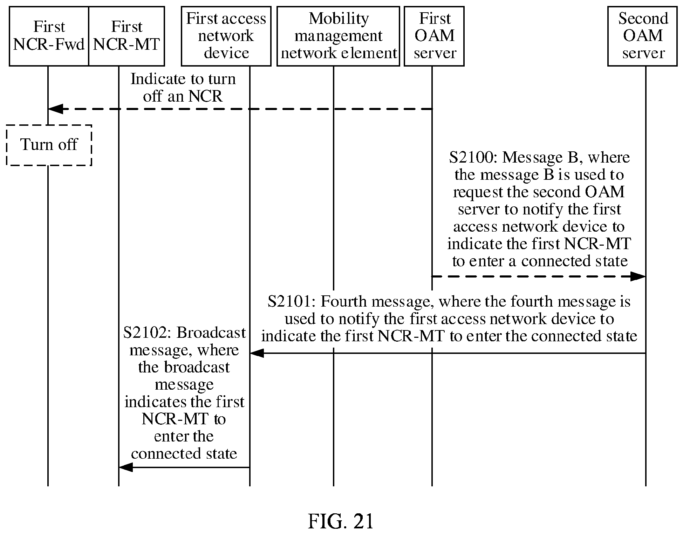

Manner 2: The first NCR-MT in the idle state is woken up by using a communication method shown in FIG. 21. Refer to FIG. 21. The communication method includes the following steps.

S2101: The second OAM server sends a fourth message to the first access network device. Correspondingly, the first access network device receives the fourth message from the second OAM server.

The fourth message is used to notify (or request) the first access network device to indicate the first NCR-MT to enter a connected state, or the fourth message is used to notify (or request) the first access network device to wake up the first NCR-MT in the idle state.

Optionally, the OAM server of the first access network device and the OAM server of the first NCR may be a same OAM server, that is, the second OAM server is the same as the first OAM server. In this case, the second OAM server may perform step S2101 when the first NCR needs to be powered on again.

Alternatively, the OAM server of the first access network device and the OAM server of the first NCR may be different OAM servers, that is, the second OAM server is different from the first OAM server. In this case, before step S2101, the method may further include the following step S2100.

S2100: The first OAM server sends a message B to the second OAM server. Correspondingly, the second OAM server receives the message B from the first OAM server.

The message B is used to request the second OAM server to notify the first access network device to indicate the first NCR-MT to enter the connected state, or the message B is used to request the second OAM server to notify the first access network device to wake up the first NCR-MT in the idle state.

Optionally, the message B includes an identifier of the first NCR. For example, the identifier of the first NCR may be a permanent identifier of the first NCR maintained by the first OAM server.

Optionally, after receiving the message B, the second OAM server may perform step S2101 and send the fourth message to the first access network device. The fourth message may carry the identifier of the first NCR.

Optionally, when the first NCR needs to be powered on again, the first OAM server may send the message B to the second OAM server.

S2102: The first access network device sends a broadcast message. Correspondingly, the first NCR-MT receives the broadcast message.

The broadcast message indicates the first NCR-MT to enter the connected state, or the broadcast message is used to wake up the first NCR-MT in the idle state. For example, the broadcast message may be a MIB or a SIB.

Optionally, the broadcast message may include the identifier of the first NCR (for example, the permanent identifier of the first NCR maintained on a first OAM side). In addition, the broadcast message may further include second indication information, and the second indication information indicates the first NCR-MT to enter the connected state. For example, the second indication information may be a 1-bit indicator.

After step S2102, after receiving the broadcast message, the first NCR-MT may initiate random access to enter the connected state.

Optionally, the turned-off first NCR-Fwd may be turned on after the first NCR-MT receives the broadcast message. Alternatively, the first OAM server may send information to the first NCR to indicate that the turned-off first NCR-Fwd is turned on again.

Based on Manner 1 or Manner 2, after an NCR-MT enters an idle state, an OAM server may initiate paging on the NCR-MT to wake up the NCR-MT, or an access network device may send a broadcast message to indicate the NCR-MT to enter a connected state. In other words, after the NCR-MT is released to the RRC idle state, the NCR-MT can be woken up again. NCR energy saving is implemented without affecting control of the access network device on an NCR. This facilitates normal operation of the NCR.

It should be noted that Manner 1 or Manner 2 may be combined with the method shown in FIG. 18 or FIG. 20. For example, after the NCR-MT is released to the idle state by using the method shown in FIG. 18 or FIG. 20, Manner 1 or Manner 2 may be used to enable the NCR-MT to enter the connected state from the idle state. Alternatively, Manner 1 or Manner 2 is applicable to waking up an NCR-MT in an idle state in another scenario. A usage scenario of Manner 1 or Manner 2 is not specifically limited in this application. The foregoing mainly describes the solutions provided in this application. Correspondingly, this application further provides a communication apparatus. The communication apparatus is configured to implement the foregoing methods, or may implement functions of the first terminal device, the first access network device, the first NCR, or the mobility management network element. The communication apparatus may be the first terminal device in the foregoing method embodiments, or may be a component that may be used in the first terminal device, for example, a chip or a chip system; the communication apparatus may be the first access network device in the foregoing method embodiments, or may be a component that may be used in the first access network device, for example, a chip or a chip system; the communication apparatus may be the first NCR in the foregoing method embodiments, or may be a component that may be used in the first NCR; or the communication apparatus may be the mobility management network element in the foregoing method embodiments, or may be a component that may be used in the mobility management network element.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

FIG. 16 is a diagram of a structure of a communication apparatus 160. The communication apparatus 160 includes a processing module 1601 and a transceiver module 1602. The communication apparatus 160 may be configured to implement functions of the first terminal device, the first access network device, the first NCR, or the mobility management network element.

In some embodiments, the communication apparatus 160 may further include a storage module (not shown in FIG. 16), configured to store program instructions and data.

In some embodiments, the transceiver module 1602 may also be referred to as a transceiver unit, and is configured to implement a sending function and/or a receiving function. The transceiver module 1602 may include a transceiver circuit, a transceiver machine, a transceiver, or a communication interface.

In some embodiments, the transceiver module 1602 may include a receiving module and a sending module, respectively configured to perform receiving and sending steps performed by the first terminal device, the first access network device, the first NCR, or the mobility management network element in the foregoing method embodiments, and/or configured to support another process of the technology described in this specification. The processing module 1601 may be configured to perform processing (for example, determining) steps performed by the first terminal device, the first access network device, the first NCR, or the mobility management network element in the foregoing method embodiments, and/or configured to support another process of the technology described in this specification.

When the communication apparatus 160 is configured to implement functions of the first terminal device,
the transceiver module 1602 is configured to receive system information of a first cell, where the system information includes indication information, and the indication information indicates a public land mobile network PLMN corresponding to a first synchronization signal and physical broadcast channel block SSB of the first cell. The processing module 1601 is configured to determine, based on the indication information, the PLMN corresponding to the first SSB.

Optionally, if the PLMN corresponding to the first SSB includes a first PLMN, the first SSB supports a terminal device that selects the first PLMN in performing initial access.

Optionally, if the PLMN corresponding to the first SSB does not include a first PLMN, the first SSB does not support a terminal device that selects the first PLMN in performing initial access.

Optionally, if the first SSB is an SSB selected by the first terminal device in an initial access procedure, when the PLMN corresponding to the first SSB does not include a first PLMN, the processing module 1601 is further configured to select a fifth SSB of the first cell, and perform initial access based on the fifth SSB. The first PLMN is a PLMN selected by the first terminal device in the initial access procedure.

Optionally, the indication information further indicates a PLMN corresponding to the fifth SSB, and the PLMN corresponding to the fifth SSB includes the first PLMN.

When the communication apparatus 160 is configured to implement functions of the first access network device,
in some embodiments,
the processing module 1601 is configured to determine indication information, where the indication information indicates a public land mobile network PLMN corresponding to a first synchronization signal and physical broadcast channel block SSB of a first cell. The transceiver module 1602 is configured to send system information of the first cell, where the system information includes the indication information.

Optionally, if the PLMN corresponding to the first SSB includes a first PLMN, the first SSB supports a terminal device that selects the first PLMN in performing initial access.

Optionally, if the PLMN corresponding to the first SSB does not include a first PLMN, the first SSB does not support a terminal device that selects the first PLMN in performing initial access.

In another embodiment,
the transceiver module 1602 is configured to receive first information via a first NCR, where the first information indicates a first public land mobile network PLMN, and the first PLMN is a PLMN selected by a first terminal device in an initial access procedure. The processing module 1601 is configured to: if the first NCR does not support the first PLMN, reject access of the first terminal device via the first NCR.

Optionally, the transceiver module 1602 is further configured to receive second information. The second information indicates at least one PLMN supported by the first NCR.

Optionally, if a PLMN selected by the first NCR in the initial access procedure is different from the first PLMN, the first NCR does not support the first PLMN.

Optionally, if the first PLMN does not support access of a network controlled repeater-mobile terminal NCR-MT, the first NCR does not support the first PLMN.

Optionally, the transceiver module 1602 is further configured to send system information, where the system information indicates whether a first cell supports access of the NCR-MT.

Optionally, the transceiver module 1602 is further configured to send system information, where the system information indicates whether each PLMN supported by a first cell supports access of the NCR-MT.

Optionally, that the processing module 1601 is configured to reject the access of the first terminal device via the first NCR includes: The processing module 1601 is configured to perform beam switching on the first terminal device.

Optionally, that the processing module 1601 is configured to reject the access of the first terminal device via the first NCR includes: The processing module 1601 is configured to send a radio resource control RRC message to the first terminal device through the transceiver module 1602, where the RRC message is used to release an RRC connection between the first terminal device and the first access network device.

Optionally, the RRC message includes third information. The third information indicates a second SSB, the second SSB is used for a next time of access of the first terminal device, and an SSB that can be forwarded by the first NCR does not include the second SSB; or the third information indicates a third SSB, the third SSB is not used for a next time of access of the first terminal device, and the third SSB is an SSB that can be forwarded by the first NCR.

Optionally, that the processing module 1601 is configured to reject the access of the first terminal device via the first NCR includes: The processing module 1601 is configured to perform cell handover on the first terminal device.

Optionally, that the processing module 1601 is configured to perform cell handover on the first terminal device includes: The processing module 1601 is configured to send measurement configuration information to the first terminal device through the transceiver module 1602, where an SSB that can be forwarded by a second NCR does not exist in a measurement object indicated by the measurement configuration information, and a PLMN served by the second NCR does not include the first PLMN.

Optionally, the second NCR includes an NCR controlled by a second access network device.

Optionally, the transceiver module 1602 is further configured to receive fourth information, where the fourth information indicates an SSB that can be forwarded by at least one NCR controlled by the second access network device and/or a PLMN served by the at least one NCR.

In still some other embodiments,
the transceiver module 1602 is configured to send a first message to a mobility management network element, where the first message is used to request a system temporary mobile subscriber identity S-TMSI of a first network controlled repeater-mobile terminal NCR-MT, or the first message is used to request the mobility management network element to retain an NG interface application protocol identity NGAP ID of the first NCR-MT. When the first access network device needs to send control information to the first NCR-MT in an idle state, the transceiver module 1602 is further configured to send a second message to the mobility management network element, where the second message is used to request to initiate paging on the first NCR-MT in the idle state, and the second message includes the S-TMSI of the first NCR-MT or the second message includes the NGAP ID of the first NCR-MT.

Optionally, the first message includes a radio access network side NGAP ID of the first NCR-MT and/or a mobility management network element side NGAP ID of the first NCR-MT.

Optionally, the first message is used to request the S-TMSI of the first NCR-MT. The transceiver module 1602 is further configured to receive a third message from the mobility management network element, where the third message includes the S-TMSI of the first NCR-MT. The processing module 1601 is configured to store the S-TMSI of the first NCR-MT.

Optionally, the first message is used to request the mobility management network element to retain the NGAP identity of the first NCR-MT. The processing module 1601 is further configured to store, by the first access network device, the NGAP ID of the first NCR-MT.

In still some other embodiments,
the transceiver module 1602 is configured to receive a second message from a second OAM server, where the second message is used to notify the first access network device to release an RRC connection of the first NCR-MT. The transceiver module 1602 is further configured to send a third message to the first NCR, where the third message is used to release the RRC connection of the first NCR-MT.

In still some other embodiments,
the transceiver module 1602 is configured to receive a fourth message from a second operation, administration and maintenance OAM server, where the fourth message is used to notify the first access network device to indicate the first NCR-MT to enter a connected state. The transceiver module 1602 is further configured to send a broadcast message, where the broadcast message indicates the first NCR-MT to enter the connected state.

When the communication apparatus 160 is configured to implement functions of the first NCR,
in some embodiments,
the processing module 1601 is configured to determine second information, where the second information indicates at least one public land mobile network PLMN supported by a first NCR, and the first NCR is an NCR controlled by a first access network device. The transceiver module 1602 is further configured to send the second information to the first access network device.

In some other embodiments:
the processing module 1601 is configured to determine, by a first network controlled repeater-mobile terminal NCR-MT, that a frequency band supported by a first network controlled repeater-forwarding module NCR-Fwd is a first frequency band. The transceiver module 1602 is configured to perform, by the first NCR-MT, initial access on the first frequency band.

Optionally, after the first NCR-MT completes initial access, the processing module 1601 is further configured to measure, by the first NCR-MT, a synchronization signal and physical broadcast channel block SSB on the first frequency band.

In still some other embodiments,
the transceiver module 1602 is configured to receive, by a first network controlled repeater-mobile terminal NCR-MT, system information of a first cell, where the system information includes NCR-support information, closed access group CAG information corresponding to at least one public land mobile network PLMN supported by the first cell, and cell reservation information. The NCR-support information indicates whether each PLMN supported by the first cell supports access of an NCR-MT, and the cell reservation information indicates whether the first cell is a reserved cell.

The processing module 1601 is configured to ignore, by the first NCR-MT, the CAG information and the cell reservation information, and access the first cell when the NCR-support information indicates that a first PLMN supports the access of the NCR-MT, where the first PLMN is a PLMN selected by the first NCR-MT in an initial access procedure.

In still some other embodiments,
the processing module 1601 is configured to determine, by a first NCR-Fwd when a first condition is met, that a first NCR-MT needs to enter an idle state. The transceiver module 1602 is configured to send, by the first NCR-MT, a first message to a first access network device, where the first message is used to request to release a radio resource control connection RRC connection of the first NCR-MT. The first condition includes: The first NCR-Fwd receives first indication information from a first operation, administration and maintenance server, where the first indication information indicates to turn off the first NCR or indicates the first NCR-MT to enter the idle state. Alternatively, the first condition includes: OFF time of the first NCR arrives.

When the communication apparatus 160 is configured to implement functions of the mobility management network element,
the transceiver module 1602 is configured to receive a fourth message from a first access network device, where the fourth message includes fifth information, and the fifth information indicates that a terminal device associated with the fourth message is a network-controlled repeater-mobile terminal NCR-MT. The processing module 1601 is configured to determine, based on the fifth information, not to perform non-public network NPN access control on the terminal device.

All related content of the steps in the foregoing method embodiments may be cited in function descriptions of the corresponding functional modules. Details are not described herein again.

Optionally, in this application, that the processing module receives/sends information through the transceiver module may alternatively be understood as that the processing module controls the transceiver module to receive/send information. Alternatively, that the processing module sends information through the transceiver module may be understood as that the processing module outputs information to the transceiver module, and the transceiver module sends the information; and that the processing module receives information through the transceiver module may be understood as that the transceiver module receives information and inputs the information to the processing module.

In this application, the communication apparatus 160 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 160 in FIG. 16 is a chip or a chip system, a function/an implementation process of the transceiver module 1602 may be implemented through an input/output interface (or a communication interface) of the chip or the chip system, and a function/an implementation process of the processing module 1601 may be implemented by a processor (or a processing circuit) of the chip or the chip system.

The communication apparatus 160 provided in this embodiment may perform the foregoing methods. Therefore, for technical effects that can be achieved by the communication apparatus, refer to the foregoing method embodiments. Details are not described herein again.

In a possible product form, the first terminal device, the first access network device, the first NCR, or the mobility management network element in embodiments of this application may alternatively be implemented by the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits capable of performing various functions described throughout this application.

In another possible product form, the first terminal device, the first access network device, the first NCR, or the mobility management network element in this application may use a composition structure shown in FIG. 17, or include components shown in FIG. 17. FIG. 17 is a diagram of composition of a communication apparatus 1700 according to this application.

As shown in FIG. 17, the communication apparatus 1700 includes at least one processor 1701. Optionally, the communication apparatus further includes a communication interface 1702.

When related program instructions are executed in the at least one processor 1701, the apparatus 1700 may be enabled to implement the communication method provided in any one of the foregoing embodiments and any possible design thereof. Alternatively, the processor 1701 is configured to implement, by using a logic circuit or executing code instructions, the communication method provided in any one of the foregoing embodiments and any possible design thereof.

The communication interface 1702 may be configured to receive the program instructions and transmit the program instructions to the processor. Alternatively, the communication interface 1702 may be configured to perform communication interaction between the communication apparatus 1700 and another communication device, for example, exchange control signaling and/or service data. For example, the communication interface 1702 may be configured to receive a signal from an apparatus other than the apparatus 1700, and transmit the signal to the processor 1701, or send a signal from the processor 1701 to a communication apparatus other than the apparatus 1700.

Optionally, the communication interface 1702 may be a code and/or data read/write interface circuit, or the communication interface 1702 may be a signal transmission interface circuit between a communication processor and a transceiver, or may be a pin of a chip.

Optionally, the communication apparatus 1700 may further include at least one memory 1703, and the memory 1703 may be configured to store the related program instructions and/or data that are/is required. It should be noted that the memory 1703 may be independent of the processor 1701, or may be integrated with the processor 1701. The memory 1703 may be located inside the communication apparatus 1700, or may be located outside the communication apparatus 1700. This is not limited.

Optionally, the communication apparatus 1700 may further include a power supply circuit 1704, and the power supply circuit 1704 may be configured to supply power to the processor 1701. The power supply circuit 1704 may be located in a same chip as the processor 1701, or may be located in a chip other than a chip in which the processor 1701 is located.

Optionally, the communication apparatus 1700 may further include a bus 1705, and parts of the communication apparatus 1700 may be interconnected through the bus 1705.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, in hardware implementation, a person skilled in the art may figure out that the communication apparatus 160 shown in FIG. 16 may be in a form of the communication apparatus 1700 shown in FIG. 17.

In an example, functions/implementation processes of the processing module 1601 in FIG. 16 may be implemented by the processor 1701 in the communication apparatus 1700 shown in FIG. 17 by invoking the computer-executable instructions stored in the memory 1703. Functions/implementation processes of the transceiver module 1602 in FIG. 16 may be implemented by the communication interface 1702 in the communication apparatus 1700 shown in FIG. 17.

It should be noted that the structure shown in FIG. 17 does not constitute a specific limitation on the first terminal device, the first access network device, the first NCR, or the mobility management network element. For example, in some other embodiments of this application, the first terminal device, the first access network device, the first NCR, or the mobility management network element may include more or fewer components than those shown in the figure, or combine some components, split some components, or have different component arrangements. The components shown in the figure may be implemented by hardware, software, or a combination of the software and the hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component), and transmit the computer-executable instructions to the processor.

In another possible implementation, the communication apparatus further includes a communication interface, and the communication interface may be configured to communicate with a module outside the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed operation process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, wherein the method comprises:
receiving system information of a first cell, wherein the system information comprises indication information, and the indication information indicates a public land mobile network PLMN corresponding to a first synchronization signal and physical broadcast channel block SSB of the first cell; and
determining, based on the indication information, the PLMN corresponding to the first SSB.

2. The method according to claim 1, wherein if the PLMN corresponding to the first SSB comprises a first PLMN, the first SSB supports a terminal device that selects the first PLMN in performing initial access.

3. The method according to claim 1 or 2, wherein if the PLMN corresponding to the first SSB does not comprise a first PLMN, the first SSB does not support a terminal device that selects the first PLMN in performing initial access.

4. The method according to claim 1, wherein the first SSB is an SSB selected by a first terminal device in an initial access procedure, and the method further comprises:
when the PLMN corresponding to the first SSB does not comprise a first PLMN, selecting a fifth SSB of the first cell, and performing initial access based on the fifth SSB; or
when the PLMN corresponding to the first SSB comprises a first PLMN, performing initial access based on the first SSB, wherein
the first PLMN is a PLMN selected by the first terminal device in the initial access procedure.

5. The method according to claim 4, wherein the indication information further indicates a PLMN corresponding to the fifth SSB, and the PLMN corresponding to the fifth SSB comprises the first PLMN.

6. The method according to any one of claims 1 to 5, wherein the indication information comprises an identifier of the first SSB and an identity of the PLMN corresponding to the first SSB.

7. A communication method, wherein the method comprises:
determining indication information, wherein the indication information indicates a public land mobile network PLMN corresponding to a first synchronization signal and physical broadcast channel block SSB of a first cell; and
sending system information of the first cell, wherein the system information comprises the indication information.

8. The method according to claim 7, wherein if the PLMN corresponding to the first SSB comprises a first PLMN, the first SSB supports a terminal device that selects the first PLMN in performing initial access.

9. The method according to claim 7 or 8, wherein if the PLMN corresponding to the first SSB does not comprise a first PLMN, the first SSB does not support a terminal device that selects the first PLMN in performing initial access.

10. The method according to any one of claims 7 to 9, wherein the indication information comprises an identifier of the first SSB and an identity of the PLMN corresponding to the first SSB.

11. A network controlled repeater NCR-based communication method, wherein the method comprises:
receiving first information via a first NCR, wherein the first information indicates a first public land mobile network PLMN, and the first PLMN is a PLMN selected by a first terminal device in an initial access procedure; and
if the first NCR does not support the first PLMN, rejecting access of the first terminal device via the first NCR.

12. The method according to claim 11, wherein the method further comprises:
receiving second information, wherein the second information indicates at least one PLMN supported by the first NCR.

13. The method according to claim 11, wherein if a PLMN selected by the first NCR in the initial access procedure is different from the first PLMN, the first NCR does not support the first PLMN.

14. The method according to claim 11, wherein if the first PLMN does not support access of a network controlled repeater-mobile terminal NCR-MT, the first NCR does not support the first PLMN.

15. The method according to any one of claims 11 to 13, wherein before receiving the first information via the first NCR, the method further comprises:
sending system information, wherein the system information indicates whether a first cell supports access of an NCR-MT.

16. The method according to any one of claims 11 to 14, wherein before receiving the first information via the first NCR, the method further comprises:
sending system information, wherein the system information indicates whether each PLMN supported by a first cell supports access of the NCR-MT.

17. The method according to any one of claims 11 to 16, wherein rejecting the access of the first terminal device via the first NCR comprises:
performing beam switching on the first terminal device.

18. The method according to any one of claims 11 to 16, wherein rejecting the access of the first terminal device via the first NCR comprises:
sending a radio resource control RRC message to the first terminal device, wherein the RRC message is used to release an RRC connection between the first terminal device and the first access network device.

19. The method according to claim 18, wherein the RRC message comprises third information; and
the third information indicates a second SSB, the second SSB is used for a next time of access of the first terminal device, and an SSB that can be forwarded by the first NCR does not comprise the second SSB;
or
the third information indicates a third SSB, the third SSB is not used for a next time of access of the first terminal device, and the third SSB is an SSB that can be forwarded by the first NCR.

20. The method according to any one of claims 11 to 16, wherein rejecting the access of the first terminal device via the first NCR comprises:
performing cell handover on the first terminal device.

21. The method according to claim 20, wherein performing cell handover on the first terminal device comprises:
sending measurement configuration information to the first terminal device, wherein an SSB that can be forwarded by a second NCR does not exist in a measurement object indicated by the measurement configuration information, and a PLMN served by the second NCR does not comprise the first PLMN.

22. The method according to claim 21, wherein the second NCR comprises an NCR controlled by a second access network device.

23. The method according to claim 22, wherein the method further comprises:
receiving fourth information, wherein the fourth information indicates an SSB that can be forwarded by at least one NCR controlled by the second access network device and/or a PLMN served by the at least one NCR.

24. A network controlled repeater NCR-based communication method, wherein the method comprises:
determining second information, wherein the second information indicates at least one public land mobile network PLMN supported by a first NCR, and the first NCR is an NCR controlled by a first access network device; and
sending the second information to the first access network device.

25. A communication apparatus, wherein the communication apparatus comprises a module configured to implement the method according to any one of claims 1 to 24.

26. A communication apparatus, comprising at least one processor and a communication interface, wherein the communication interface is configured to receive and/or send a signal, and the processor is configured to enable the method according to any one of claims 1 to 24 to be performed.

27. A computer-readable storage medium, wherein the computer-readable storage medium stores computer program instructions, and when the computer program instructions are executed by a processor, the method according to any one of claims 1 to 24 is implemented.

28. A computer program product, wherein the computer program product comprises program instructions, and when the program instructions are executed by a processor, the method according to any one of claims 1 to 24 is implemented.
